(19) Europäisches Patentamt
European Patent Office
Office européen des brevets

(11) **EP 3 798 256 B1**

(12) # EUROPEAN PATENT SPECIFICATION

(45) Date of publication and mention of the grant of the patent:
**23.10.2024 Bulletin 2024/43**

(21) Application number: **20806412.1**

(22) Date of filing: **01.05.2020**

(51) International Patent Classification (IPC):
***C08K 5/134*** *(2006.01)* ***C08K 5/3435*** *(2006.01)*
***C08L 23/06*** *(2006.01)* ***C08L 101/00*** *(2006.01)*
***C08J 5/18*** *(2006.01)* ***A01G 9/14*** *(2006.01)*
***A01G 13/02*** *(2006.01)*

(52) Cooperative Patent Classification (CPC):
(C-Sets available)
**C08K 5/1345; C08J 5/18; C08K 5/3435; C08L 23/0815;** A01G 13/0275; C08J 2323/06; C08J 2323/08; C08J 2431/04 (Cont.)

(86) International application number:
**PCT/JP2020/018391**

(87) International publication number:
**WO 2020/230664 (19.11.2020 Gazette 2020/47)**

(54) **AGRICULTURAL FILM AND METHOD FOR GROWING PLANT**

LANDWIRTSCHAFTLICHE FOLIE UND PFLANZENZUCHTVERFAHREN

FILM AGRICOLE ET PROCÉDÉ DE CROISSANCE DE PLANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2019 JP 2019090149**

(43) Date of publication of application:
**31.03.2021 Bulletin 2021/13**

(73) Proprietor: **ADEKA CORPORATION**
**Arakawa-ku**
**Tokyo**
**116-8554 (JP)**

(72) Inventors:
- **AYABE, Takashi**
**Saitama-shi, Saitama 336-0022 (JP)**
- **MIYAMURA, Daichi**
**Saitama-shi, Saitama 336-0022 (JP)**

(74) Representative: **Müller-Boré & Partner Patentanwälte PartG mbB**
**Friedenheimer Brücke 21**
**80639 München (DE)**

(56) References cited:
**EP-A1- 3 835 061**
**JP-A- 2001 002 949**
**JP-A- 2001 226 600**
**JP-A- 2003 231 777**
**JP-A- 2003 286 412**
**JP-A- 2003 325 060**
**JP-A- 2004 137 304**
**JP-A- H0 925 369**
**JP-A- H07 188 473**
**JP-A- H10 195 258**
**JP-B2- H 022 567**
**US-A1- 2010 249 288**
**US-A1- 2015 353 710**

- **ANONYMOUS: "BASF’s Light Stabilizer For Greenhouse Films Helps Vietnam...", 30 April 2019 (2019-04-30), XP055906500, Retrieved from the Internet <URL:https://www.seedtoday.com/article/167662/basfs-light-stabilizer-for-greenhouse-films-helps-vietnam-farmers-increase-crop-yields-reduce-waste> [retrieved on 20220329]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 798 256 B1

(52) Cooperative Patent Classification (CPC): (Cont.)

C-Sets
**C08K 5/1345, C08L 23/06;**
**C08K 5/1345, C08L 23/0853;**
**C08K 5/3435, C08L 23/06;**
**C08K 5/3435, C08L 23/0853;**
**C08L 23/0815, C08L 23/0853, C08K 5/3435, C08K 5/1345**

## Description

### TECHNICAL FIELD

The present invention relates to the use of an agricultural film in a growing method of sulfur fumigation or sulfur spraying, to a method for growing a plant, and to a method of improving an ability of an agricultural film to suppress sulfur absorption.

### BACKGROUND ART

Various developments have been made so far for an agricultural film. For example, a technique described in JP 2015-198579 A is known as this type of technique. JP 2015-198579 A discloses an agricultural film containing a hindered amine light stabilizer (such as claim 4 of JP 2015-198579 A) .

Further there is disclosed a polyolefin resin composition for an agricultural film and an agricultural film in JP 2003-231777 A, and a resin composition in US 2015/353710 A1.

### SUMMARY OF THE INVENTION

However, as a result of study conducted by the present inventors, it has been found for the agricultural film disclosed in JP 2015-198579 A that there is room for improvement in terms of long-term weather resistance and transparency.

In agricultural work, a growing method such as a sulfur fumigation method or a spraying method of a sulfur-containing chemical solution such as a sulfur flowable agent may be adopted for the purpose of preventing diseases of plants (agricultural crops) .

However, sulfur contained in the fumigation or chemical solution may reduce weather resistance of agricultural films.

As a result of extensive studies in view of such circumstances, the present inventors have found that combined use of a predetermined hindered amine light stabilizer and a predetermined benzoate compound as a synergist thereof suppresses deterioration of weather resistance in an agricultural film provided with a layer containing these compounds. Although a detailed mechanism for such an effect is not clear, it is considered that the synergist suppresses the salt formation between sulfur and the hindered amine light stabilizer, which thus can suppress the incorporation or absorption of sulfur in the agricultural film.

Focusing on the characteristic that sulfur is less likely to be absorbed in the weather resistant layer of the agricultural film and as a result of repeated studies, the present inventors have found that long-term light resistance of the agricultural film can be stably evaluated by using a degree of difficulty in absorbing sulfur in the agricultural film (that is, a sulfur uptake amount) as an index. Then, the present inventors have found that long-term weather resistance and transparency of the agricultural film can be improved in a case where, in a case where a sulfur uptake amount is defined as $\Delta W$ and a thickness of the agricultural film is defined as H1, $\Delta W/H1$ is adopted as an index of the sulfur uptake amount, and the upper limit and the lower limit of the index are set within an appropriate range.

The present invention which is set out in the appended claims has been completed based on these findings.

According to the present invention, there is provided the use of an agricultural film in a growing method of sulfur fumigation or sulfur spraying, including:

a layer containing one or two or more hindered amine light stabilizers selected from the group consisting of a compound represented by General Formula (A1) and a compound represented by General Formula (A2), and
a synergist containing one or two or more selected from benzoate compounds represented by General Formula (B),

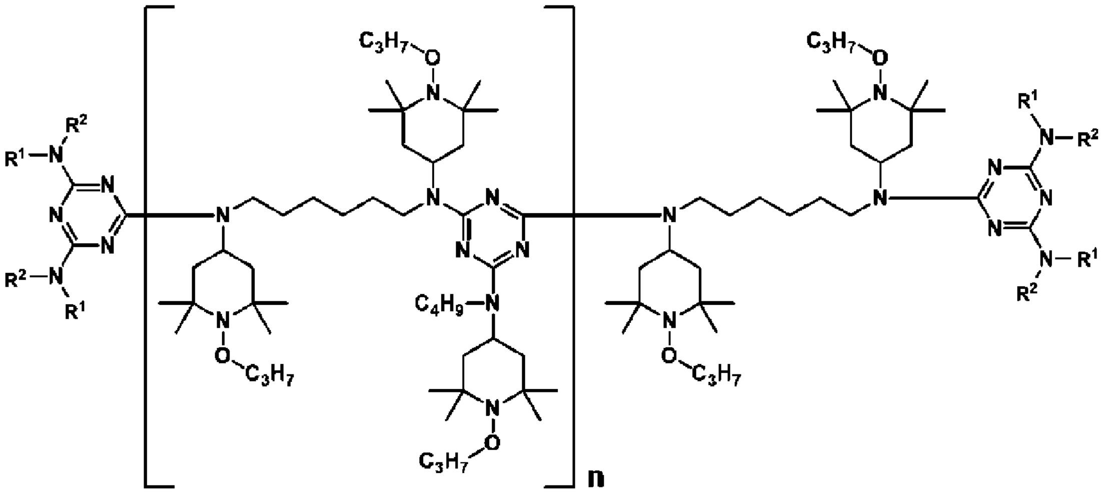

(A1)

(in General Formula (A1), $R^1$ and $R^2$ may be the same or different from each other and each independently represent an alkyl group having 1 to 8 carbon atoms, and in General Formula (A1), n is an integer of 0 or more.),

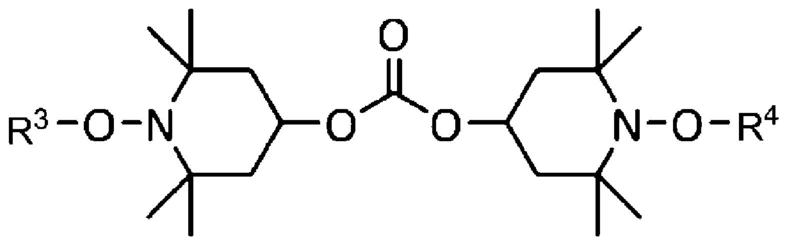

(A2)

(in General Formula (A2), $R^3$ and $R^4$ may be the same or different from each other and each independently represent an alkyl group having 1 to 20 carbon atoms.),

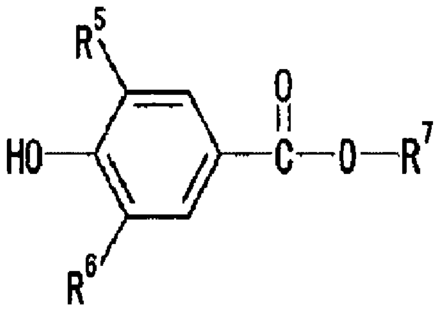

(B)

(in General Formula (B), $R^5$ and $R^6$ may be the same or different from each other and each independently represent an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms.),

wherein X and Y satisfy $0.2/0.8 \leq X/Y \leq 0.6/0.4$, in a case where the content of the hindered amine light stabilizer in terms of mass in the layer is defined as X and the content of the synergist in terms of mass in the layer is defined as Y, and

$\Delta W/H1$ is equal to or more than 2.80 ppm/um and equal to or less than 4.70 ppm/$\mu$m, in a case where a sulfur uptake amount measured according to Procedure A is defined as $\Delta W$ and a thickness of the agricultural film is defined as H1.

<Procedure A>

Procedure A1: using the agricultural film, a content (ppm) of an elemental sulfur in the agricultural film before a sulfur fumigation treatment is measured according to an order of (1), (2), (4), and (5), and the measured value is defined as $S_0$.

Procedure A2: using the agricultural film to be measured in Procedure A1, a content (ppm) of the elemental sulfur in the agricultural film after the sulfur fumigation treatment is measured according to an order of (1), (2), (3), (4), and (5), and the measured value is defined as $S_1$. Note that $S_1$ is an average value of four measured values.

Procedure A3: using $S_0$ obtained in Procedure A1 and $S_1$ obtained in Procedure A2, a sulfur uptake amount (ppm) of the agricultural film is calculated based on Expression (I).

$$|S_1-S_0| \cdots \text{Expression (I)}$$

(1): Preparation of test specimen

The agricultural film is cut out to produce a strip-shaped film test specimen A having a length of 13 cm and a width of 2.5 cm.

(2): Washing treatment

The test specimen A is immersed in distilled water having a liquid temperature of 25°C, taken out of the distilled water, and then dried.

(3): Sulfur fumigation treatment

A vinyl greenhouse having a closed space having a substantially rectangular parallelepiped shape with a length of 50 cm, a width of 56 cm, and a height of 60 cm is prepared. Then, a stirrer is installed on a top surface inside the vinyl greenhouse, a heating device is installed on a bottom surface inside the vinyl greenhouse, and an aluminum foil tray is disposed on the heating device. Four of the test specimens A are installed in a suspended state inside the vinyl greenhouse.

Then, the following sulfur fumigation operation is repeated four times.

(Sulfur fumigation operation)

120 mg of powdery sulfur is put into the tray. Subsequently, a rotation speed of the stirrer is set to 180 rpm, and the tray is heated at 190°C for 4 hours.

(4): Surface treatment

Light irradiation is carried out on the test specimen A for 102 minutes under the following conditions and subsequently, water is sprayed on the test specimen A for 18 minutes together with the light irradiation under the following conditions. This operation for a total of 120 minutes is carried out as one cycle for a total of 60 cycles, whereby a surface treatment for a total of 120 hours is carried out on the test specimen A.

(Conditions of light irradiation)

The test specimen A is irradiated by a xenon lamp having an irradiation intensity of 60 $W/m^2$ under conditions of a temperature of 65°C and a relative humidity of 50%.

(5): Measurement of elemental sulfur content

200 mg of a sample obtained by cutting the test specimen A in a plate thickness direction is added to 5 g of a 70% nitric acid to obtain a nitric acid solution. The nitric acid solution is subjected to a pretreatment for liquefying the sample using a microwave wet decomposition method to obtain a measurement solution. The content of elemental sulfur in the obtained measurement solution is measured using an ICP emission spectrometer.

In addition, according to the present invention, there is provided a method for growing a plant, including:

a step of disposing the agricultural film in a greenhouse;
a step of disposing a plant in the greenhouse; and
a step of carrying out sulfur fumigation or sulfur spraying in the greenhouse.

The agricultural film used according to the present invention has excellent long-term weather resistance and

excellent transparency.

BRIEF DESCRIPTION OF THE DRAWINGS

Fig. 1(A) and 1(B) are cross-sectional diagrams showing an example of a configuration of an agricultural film used according to the present invention.

Fig. 2 is a diagram for illustrating an outline of fumigation equipment used for a sulfur fumigation treatment.

Fig. 3(A), 3(B) and 3(C) are diagrams illustrating a procedure of a pretreatment of a test specimen whose light transmittance is to be measured.

Fig. 4 is a diagram for illustrating an outline of a principle of measuring a light transmittance of a test specimen using a spectrophotometer.

DESCRIPTION OF EMBODIMENTS

Hereinafter, embodiments of the present invention will be described with reference to the accompanying drawings. In all the drawings, the same constituent elements will be given the same reference numeral, and the description thereof will not be repeated. In addition, the figure is a schematic diagram and does not match an actual dimensional ratio.

Herein, description will be given by defining the front, rear, left, right, upper, and lower directions as shown in the figure. However, this is provided for the sake of convenience in order to simply describe a relative relationship of the constituent elements. Therefore, it does not limit the direction in which a product embodying the present invention is produced or used.

The agricultural film used according to the present invention will be described in the following.

The agricultural film used according to the present invention is provided with a layer containing one or two or more hindered amine light stabilizers selected from the group consisting of a compound represented by General Formula (A1) and a compound represented by General Formula (A2), and a synergist containing one or two or more selected from benzoate compounds represented by General Formula (B) (hereinafter, referred to as a weather resistant layer).

The weather resistant layer may contain one or two or more hindered amine light stabilizers selected from the group consisting of the compound represented by General Formula (A1) and the compound represented by General Formula (A2).

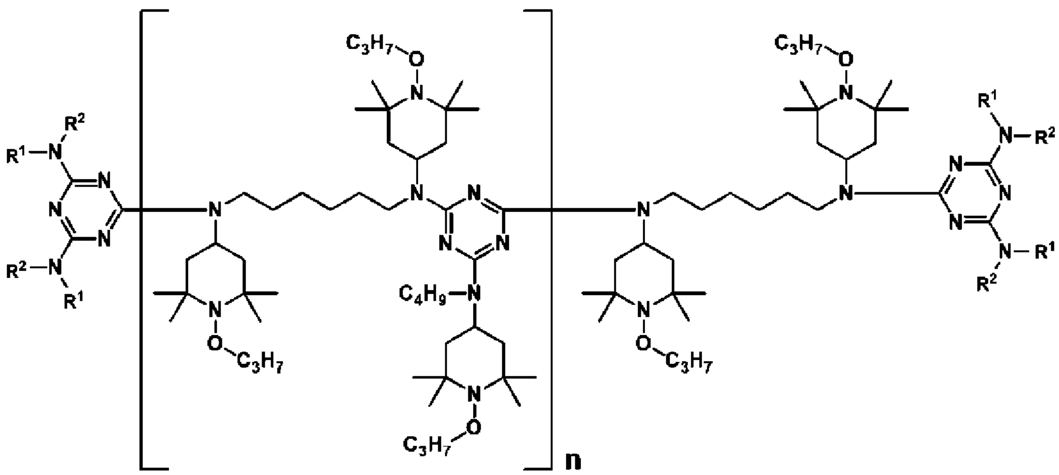

(A1)

In General Formula (A1), $R^1$ and $R^2$ may be the same or different from each other and each independently represent an alkyl group having 1 to 8 carbon atoms.

In General Formula (A1), n is an integer of 0 or more. The numerical value of n may be, for example, 0 to 10, and may be 0 to 6. The hindered amine light stabilizer may include one or two or more compounds having different n values and represented by General Formula (A1). Examples of the alkyl group having 1 to 8 carbon atoms, which is represented by $R^1$ and $R^2$, include methyl, ethyl, propyl, isopropyl, butyl, sec-butyl, tert-butyl, pentyl, tert-pentyl, hexyl, heptyl, octyl, and 1,1,3,3-tetramethylbutyl. Among these, propyl, isopropyl, butyl, sec-butyl, or tert-butyl is preferable, and butyl is particularly preferable.

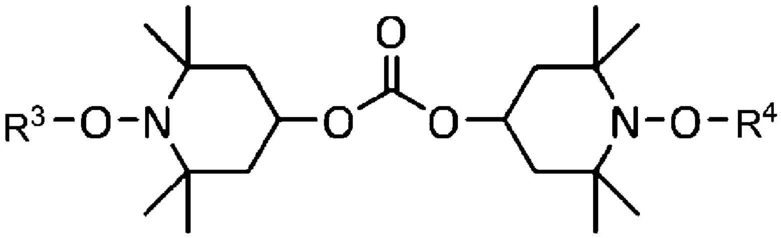

(A2)

In General Formula (A2), $R^3$ and $R^4$ may be the same or different from each other and each independently represent an alkyl group having 1 to 20 carbon atoms. Examples of the alkyl group having 1 to 20 carbon atoms, which is represented by $R^3$ and $R^4$, include methyl, ethyl, propyl, butyl, pentyl, hexyl, heptyl, octyl, 2-ethylhexyl, nonyl, decyl, undecyl, dodecyl, tridecyl, tetradecyl, pentadecyl, hexadecyl, heptadecyl, and octadecyl. Among these, octyl, 2-ethylhexyl, nonyl, decyl, undecyl, dodecyl, tridecyl, tetradecyl, pentadecyl, hexadecyl, heptadecyl, or octadecyl is preferable, octyl, 2-ethylhexyl, nonyl, decyl, undecyl, dodecyl, tridecyl, or tetradecyl is more preferable, and undecyl is particularly preferable.

An example of the compound represented by General Formula (A1) may include the following compound A1. In the compound A1, n is an integer of 0 or more. The numerical value of n may be, for example, 0 to 10, and may be 0 to 6. The hindered amine light stabilizer may include one or two or more compounds A1 having different n values.

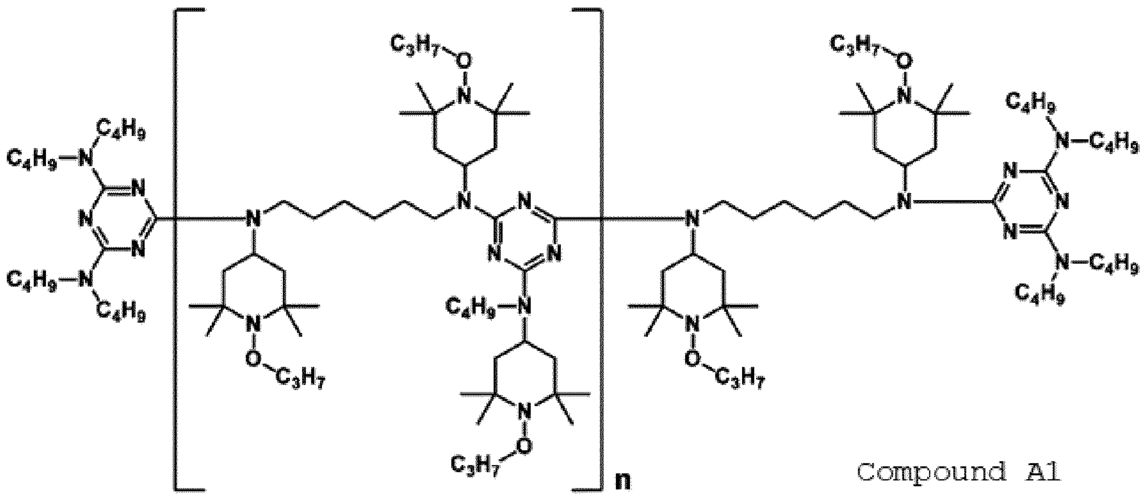

Compound A1

An example of the compound represented by General Formula (A2) may include the following compound A2.

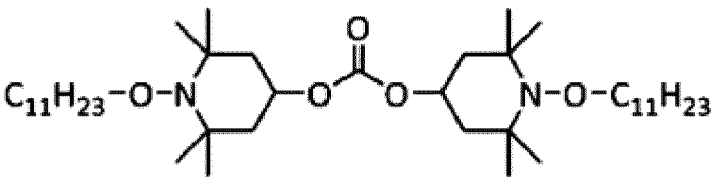

Compound A2

The weather resistant layer may contain at least one benzoate compound represented by General Formula (B) as the synergist. These compounds may be used alone or in combination of two or more thereof.

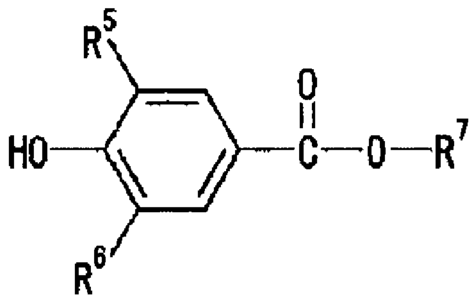

(B)

In General Formula (B), $R^5$ and $R^6$ may be the same or different from each other and each independently represent an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms.

Examples of the alkyl group having 1 to 8 carbon atoms, which is represented by $R^5$ and $R^6$, include methyl, ethyl, propyl, isopropyl, butyl, sec-butyl, tert-butyl, pentyl, tert-pentyl, hexyl, heptyl, octyl, and 1,1,3,3-tetramethylbutyl. Among these, isopropyl, sec-butyl, tert-butyl, tert-pentyl, or 1,1,3,3-tetramethylbutyl is preferable, and tert-butyl or tert-pentyl is more preferable.

Examples of the alkyl group having 1 to 30 carbon atoms, which is represented by $R^7$, include methyl, ethyl, propyl, butyl, pentyl, hexyl, heptyl, octyl, 2-ethylhexyl, nonyl, decyl, undecyl, dodecyl, tridecyl, tetradecyl, pentadecyl, hexadecyl, heptadecyl, and octadecyl. Among these, octyl, 2-ethylhexyl, nonyl, decyl, undecyl, dodecyl, tridecyl, tetradecyl, pentadecyl, hexadecyl, heptadecyl, or octadecyl is preferable, and dodecyl, tridecyl, tetradecyl, pentadecyl, hexadecyl, heptadecyl, or octadecyl is more preferable.

The aryl group represented by $R^7$ may be, for example, phenyl.

Examples of the alkylaryl group represented by $R^7$ include methylphenyl, butylphenyl, 2,4-di-tert-butylphenyl, 2,4-di-tert-amylphenyl, 2,4-dicumylphenyl, and 2,4-di-tert-butyl-5-methylphenyl. Among these, 2,4-di-tert-butylphenyl, 2,4-di-tert-amylphenyl, 2,4-dicumylphenyl, or 2,4-di-tert-butyl-5-methylphenyl is preferable, 2,4-di-tert-butylphenyl or 2,4-di-tert-amylphenyl is more preferable, and 2,4-di-tert-butylphenyl is particularly preferable.

In addition, $R^7$ in General Formula (B) may be an arylalkyl group having 7 to 30 carbon atoms, specifically, an arylalkyl group such as phenylmethyl.

Examples of the benzoate compound represented by General Formula (B) include the following compound Nos. 7 to 15. These compounds may be used alone or in combination of two or more thereof.

However, the benzoate compound represented by General Formula (B) is not limited to the following compounds.

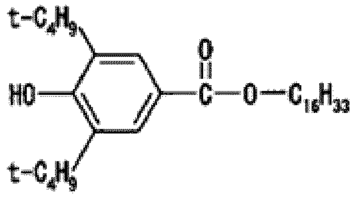

Compound No. 7

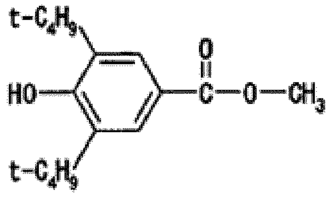

Compound No. 8

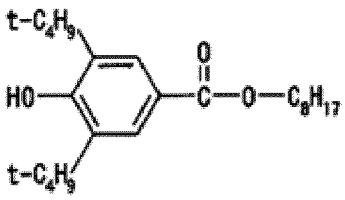

Compound No. 9

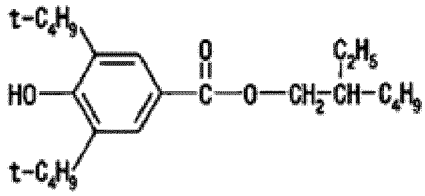

Compound No. 10

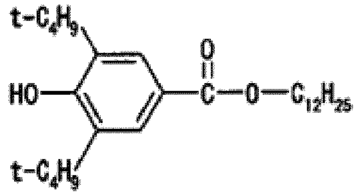

Compound No. 11

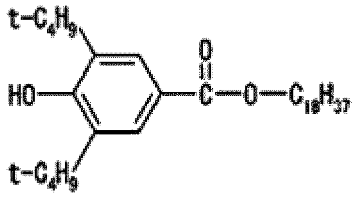

Compound No. 12

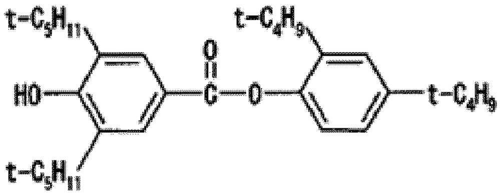

Compound No. 15

Among the above compounds, the benzoate compound represented by General Formula (B) may include at least one of the following compound B1 or compound B2.

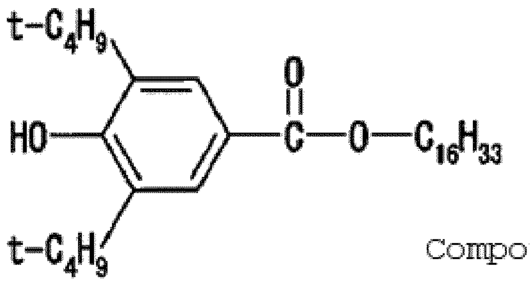

Compound B1

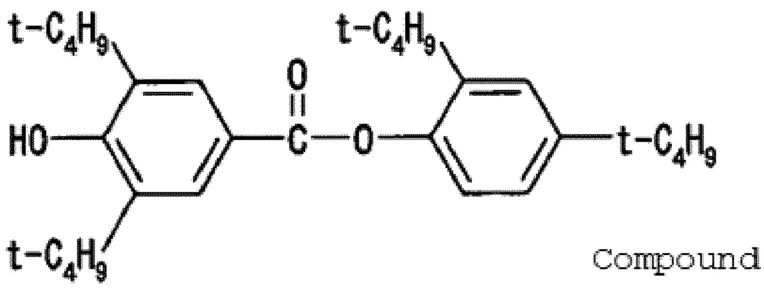

Compound B2

The weather resistant layer of the agricultural film may include a thermoplastic resin.

Examples of the thermoplastic resin include thermoplastic resins, such as polyolefins or copolymers thereof,

including α-olefin polymers such as polypropylene, high density polyethylene, low density polyethylene, linear low density polyethylene, polybutene-1, and poly-4-methylpentene, ethylene-vinyl acetate copolymers, ethylene-vinyl alcohol copolymers, ethylene-acrylic acid ester copolymers, and ethylene-propylene copolymers; halogen-containing resins such as polyvinyl chloride, polyvinylidene chloride, chlorinated polyethylene, chlorinated polypropylene, polyvinylidene fluoride, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic acid ester copolymers, vinyl chloride-maleic acid ester copolymers, and vinyl chloride-cyclohexyl maleimide copolymers; petroleum resins; coumarone resins; polystyrene; polyvinyl acetate; acrylic resins; copolymers of either or both of styrene and α-methylstyrene with other monomer(s), (for example, maleic anhydride, phenylmaleimide, methyl methacrylate, butadiene, and acrylonitrile), such as AS resins, ABS resins, MBS resins, and heat resistant ABS resins; polymethyl methacrylate; polyvinyl alcohols; polyvinyl formal; polyvinyl butyral; linear polyesters such as polyethylene terephthalate and polytetramethylene terephthalate; polyphenylene oxide; polyamides such as polycaprolactam and polyhexamethylene adipamide; polycarbonate; branched polycarbonate; polyacetal; polyphenylene sulfide; polyurethane; and cellulosic resins; and mixtures thereof; or phenol resins, urea resins, melamine resins, epoxy resins, and unsaturated polyester resins. These compounds may be used alone or in combination of two or more thereof. Among these, polyolefin resins such as polyethylene, ethylene-vinyl acetate copolymers, ethylene-vinyl alcohol copolymers, and ethylene-acrylic acid ester copolymers may be used.

In addition, α-olefin polymers, blended products or copolymers of polyethylene and other α-olefin polymers, copolymers of α-olefin polymers such as polyethylene and ethylene-vinyl acetate, or blended products or copolymers with polyolefins such as ethylene-propylene copolymers may be used as the thermoplastic resin.

Above all, the thermoplastic resin may include at least one of linear low density polyethylene or low density polyethylene.

The lower limit of total content of the hindered amine light stabilizer and the synergist (benzoate compound) in the weather resistant layer is, for example, equal to or more than 0.01 parts by mass, preferably equal to or more than 0.2 parts by mass, and more preferably equal to or more than 0.8 parts by mass with respect to 100 parts by mass of the thermoplastic resin. On the other hand, the upper limit thereof is, for example, equal to or less than 10 parts by mass, preferably equal to or less than 3 parts by mass, and more preferably equal to or less than 1 part by mass. Light resistance can be improved by setting the total content of the hindered amine light stabilizer and the synergist within such a range.

The content of the hindered amine light stabilizer in terms of mass in the weather resistant layer is defined as X, and the content of the synergist in terms of mass is defined as Y.

According to the present invention, X and Y in the weather resistant layer are configured to satisfy $0.2/0.8 \leq X/Y \leq 0.6/0.4$, preferably $0.3/0.7 \leq X/Y \leq 0.6/0.4$, and more preferably $0.4/0.6 \leq X/Y \leq 0.6/0.4$. Long-term light resistance can be improved by setting X/Y to be equal to or less than the above upper limit value. Transparency and long-term light resistance can be improved by setting X/Y to be equal to or more than the above lower limit value.

The weather resistant layer may contain other additives commonly used for the agricultural films within a range that does not impair the effects of the present invention, in addition to the hindered amine light stabilizer, the benzoate compound as the synergist, and the thermoplastic resin. The other additives may be configured so as not to include a benzophenone-based ultraviolet absorber, a benzotriazole-based ultraviolet absorber, or a triazine-based ultraviolet absorber.

Thickness of an agricultural film 100 is not particularly limited and is, for example, 10 μm to 1 mm, preferably 30 um to 500 μm, and more preferably 50 μm to 300 μm.

Fig. 1(A) and 1(B) are cross-sectional diagrams showing an example of the configuration of the agricultural film used according to the present invention.

The agricultural film 100 of Fig. 1(A) includes at least one layer (weather resistant layer 10) containing the hindered amine light stabilizer and the synergist described above. The agricultural film 100 may include a single or a plurality of the weather resistant layers 10 inside in a thickness direction.

In addition, the agricultural film 100 may be configured of a multilayer film including one or two or more other layers (base layer 20) in addition to the weather resistant layer 10, as shown in Fig. 1(B). The multilayer film may have two or more layers, for example, three layers, four layers, five or more layers, or seven or more layers. The upper limit of number of laminated layers in multilayer film is not particularly limited and may be, for example, equal to or less than 10 layers.

In addition, the base layer 20 may be provided on one surface of the weather resistant layer 10, and the base layer 20 and the surface layer may be provided as other layers on each of the one surface and the other surface of the weather resistant layer 10. Unlike the weather resistant layer 10, the other layer may have a configuration that does not contain both the hindered amine light stabilizer and the synergist described above, and may include only either one of the hindered amine light stabilizer and the synergist, and may contain only one of them or may not contain both of them.

The other layer may be configured of the above-mentioned thermoplastic resin, and may contain the following other additives as necessary. For example, linear low density polyethylene or low density polyethylene may be used as

the thermoplastic resin for the other layer.

General agricultural films are used in various situations such as for greenhouse forming materials.

In agricultural work, a growing method such as a method of carrying out sulfur fumigation in a greenhouse or a method of spraying a chemical solution containing sulfur on a plant may be adopted for the purpose of preventing diseases of plants (agricultural crops).

However, sulfur contained in the fumigation or chemical solution may reduce weather resistance of agricultural films.

Although the detailed mechanism for such an effect is not clear, it is considered that the sulfur adhering to or transferred into the agricultural film is oxidized to be acidified and forms a salt with the hindered amine light stabilizer to deactivate the function of the light stabilizer, so weather resistance cannot be maintained.

In addition, such a phenomenon of deterioration of weather resistance is remarkably observed in a case where sulfur fumigation is carried out in the greenhouse.

As a result of extensive studies in view of such circumstances, the present inventors have found that combined use of a predetermined hindered amine light stabilizer and a predetermined benzoate compound as a synergist suppresses the deterioration of weather resistance in the agricultural film provided with a layer containing these compounds. At this time, it has been found that the characteristic that makes it difficult for sulfur to be absorbed inside the agricultural film was expressed.

Although a detailed mechanism for such an effect is not clear, it is considered that the synergist suppresses the salt formation between sulfur and the hindered amine light stabilizer, which thus can suppress the incorporation or absorption of sulfur in the agricultural film.

As a result of the above, the present inventors have found a new characteristic of the agricultural film that is the ability to suppress sulfur absorption.

As a result of repeated studies based on such findings, it has been found that the long-term light resistance of the agricultural film 100 can be stably evaluated by using a degree of difficulty in absorbing sulfur in the agricultural film 100 (that is, the sulfur uptake amount) as an index. Then, the present inventors have found that the weather resistance and transparency of the agricultural film can be improved in a case where, in a case where the sulfur uptake amount measured according to Procedure A is defined as $\Delta W$, the thickness of the agricultural film 100 is defined as H1, and the thickness of the weather resistant layer 10 is defined as H2, $(\Delta W \times (H2/H1))/H2$, that is, $\Delta W/H1$ is adopted as an index of the sulfur uptake amount, and the upper limit and the lower limit of the index are set within an appropriate range.

Hereinafter, Procedure A for calculating $\Delta W$ (sulfur uptake amount) of the agricultural film 100 will be described.

<Procedure A>

Procedure A1: using the agricultural film 100, the content (ppm) of the elemental sulfur in the agricultural film 100 before the sulfur fumigation treatment is measured according to the following order of (1), (2), (4), and (5), and the measured value is defined as $S_0$.

Procedure A2: using the agricultural film 100 to be measured in Procedure A1, the content (ppm) of the elemental sulfur in the agricultural film 100 after the sulfur fumigation treatment is measured according to the following order of (1), (2), (3), (4), and (5), and the measured value is defined as $S_1$. Note that $S_1$ is an average value of four measured values.

Procedure A3: using $S_0$ obtained in Procedure A1 and $S_1$ obtained in Procedure A2, the sulfur uptake amount (ppm) of the agricultural film 100 is calculated based on Expression (I).

$$|S_1 - S_0| \cdots \text{Expression (I)}$$

(1): Preparation of test specimen

The agricultural film 100 is cut out to produce a strip-shaped film test specimen A having a length of 13 cm and a width of 2.5 cm.

(2): Washing treatment

The agricultural film 100A is immersed in distilled water having a liquid temperature of 25°C, taken out of the distilled water, and then dried.

(3): Sulfur fumigation treatment

A vinyl greenhouse having a closed space having a substantially rectangular parallelepiped shape with a length

of 50 cm, a width of 56 cm, and a height of 60 cm is prepared. Then, a stirrer is installed on a top surface inside the vinyl greenhouse, a heating device is installed on a bottom surface inside the vinyl greenhouse, and an aluminum foil tray is disposed on the heating device. Four of the test specimens A are installed in a suspended state inside the vinyl greenhouse.

Then, the following sulfur fumigation operation is repeated four times.

(Sulfur fumigation operation)

120 mg of powdery sulfur is put into the tray. Subsequently, a rotation speed of the stirrer is set to 180 rpm, and the tray is heated at 190°C for 4 hours.

(4): Surface treatment

Light irradiation is carried out on the test specimen A for 102 minutes under the following conditions and subsequently, water is sprayed on the test specimen A for 18 minutes together with the light irradiation under the following conditions. This operation for a total of 120 minutes is carried out as one cycle for a total of 60 cycles, whereby a surface treatment for a total of 120 hours is carried out on the test specimen A.

(Conditions of light irradiation)

The test specimen A is irradiated by a xenon lamp having an irradiation intensity of 60 $W/m^2$ under conditions of a temperature of 65°C and a relative humidity of 50%.

According to the knowledge of the present inventors, it was found that variations in measurement of the content of the elemental sulfur contained in the film can be reduced by carrying out an appropriate surface treatment after sulfur fumigation. Although the detailed mechanism for such an effect is not clear, it is considered that the sulfur adhering to the film surface can be appropriately removed by the surface treatment. In addition, it has been found that not only light irradiation but also water spraying is an important factor for this surface treatment.

(5): Measurement of elemental sulfur content

200 mg of a sample obtained by cutting the test specimen A in a plate thickness direction is added to 5 g of a 70% nitric acid to obtain a nitric acid solution. The nitric acid solution is subjected to a pretreatment for liquefying the sample using a microwave wet decomposition method to obtain a measurement solution. The content of elemental sulfur in the obtained measurement solution is measured using an ICP emission spectrometer. The content of elemental sulfur in the measurement solution is defined as the content (ppm) of elemental sulfur in the agricultural film 100.

According to the knowledge of the present inventors, it has been found that variations in the measurement of the elemental sulfur content can be reduced by using a new vinyl greenhouse at an appropriate timing, in a case where the vinyl greenhouse has been used multiple times for a sulfur fumigation operation.

The sulfur uptake amount measured according to Procedure A is defined as $\Delta W$, the thickness of the agricultural film 100 is defined as H1, and the thickness of the layer containing the hindered amine light stabilizer and the synergist (the weather resistant layer 10) is defined as H2.

At this time, the agricultural film 100 is configured so as to satisfy that $(\Delta W \times (H2/H1))/H2$, that is, $\Delta W/H1$ is equal to or more than 2.80 ppm/um and equal to or less than 4.70 ppm/μm, preferably equal to or more than 2.81 ppm/um and equal to or less than 4.60 ppm/μm, and more preferably equal to or more than 2.82 ppm/um and equal to or less than 4.50 ppm/μm.

Here, a film thickness ratio in the weather resistant layer 10 included in the entire agricultural film 100 is calculated by H2/H1 in the expression represented by $(\Delta W \times (H2/H1))/H2$, and the sulfur uptake amount per unit thickness in the weather resistant layer 10 is calculated by 1/H2.

Long-term weather resistance can be improved by setting the upper limit of $\Delta W/H1$ to be equal to or less than the above upper limit value. Specifically, the deterioration of the long-term weather resistance of the agricultural film 100 can be suppressed even in a case where the sulfur fumigation or sulfur spraying is carried out singly or plural times at the time of growing a plant.

On the other hand, the transparency of the agricultural film 100 can be improved, thus making it possible to realize an agricultural film suitable for a greenhouse, by setting the lower limit of $\Delta W/H1$ to be equal to or more than the above lower limit value. In addition, long-term weather resistance of the agricultural film 100 can be improved.

In addition, according to the knowledge of the present inventors, it has been found in the agricultural film 100 that an agricultural film with excellent plant growth ability and suitable for growing plants such as agricultural crops can be realized by setting $T_{290}/T_{340}$ to be equal to or more than a predetermined value, in a case where a light transmittance

of 290 nm is defined as $T_{290}$ and a light transmittance of 340 nm is defined as $T_{340}$, the light transmittance being measured according to Procedure B.

The light transmittance of 290 nm is defined as $T_{290}$ and the light transmittance of 340 nm is defined as $T_{340}$, the light transmittance being measured according to Procedure B.

At this time, the agricultural film 100 is configured so as to satisfy that $T_{290}/T_{340}$ is equal to or more than 0.76 and equal to or less than 1.00, preferably equal to or more than 0.80 and equal to or less than 1.00, and more preferably equal to or more than 0.85 and equal to or less than 0.99. Generally, UV-B region of 280 nm to 315 nm is considered to be a wavelength region required for the growth of agricultural crops, prevention of diseases, and prevention of pest damage occurrence. Therefore, setting $T_{290}/T_{340}$ to be equal to or more than the above lower limit value makes it possible to enhance the plant growing ability of the agricultural film 100.

Hereinafter, Procedure B for measuring the light transmittance of the agricultural film 100 will be described.

<Procedure B>

Procedure B1: using the agricultural film 100 to be measured in Procedure A, the film is cut out to produce a strip-shaped film test specimen B having a length of 10 cm and a width of 5 cm. Subsequently, the test specimen B is immersed in liquid paraffin, and the taken-out test specimen B is held in a suspended state for 30 minutes to carry out a pretreatment on the test specimen B.

Procedure B2: the test specimen B pretreated in Procedure B1 is placed in a spectrophotometer, and a light transmittance (%) is measured at a wavelength of 200 nm to 700 nm. The obtained measured value is normalized such that a light transmittance at 400 nm is 85%. The light transmittance at a wavelength of Xnm after normalization is expressed as Tx (%).

In addition, light transmittance $T_{660}$ at 660 nm in the agricultural film 100 is, for example, equal to or more than 80%, preferably equal to or more than 85%, and more preferably equal to or more than 86%. Therefore, the agricultural film 100 can have excellent light transmittance in a wide wavelength range.

In the present invention, for example, the $\Delta$W/H1 and the light transmittance can be controlled by appropriately selecting the type and formulation amount of each component contained in the agricultural film and the method for preparing the agricultural film. Above all, for example, appropriate selection of types and composition ratios of the hindered amine light stabilizer and the benzoate compound and addition methods thereof are mentioned as factors for setting the $\Delta$W/H1 and the light transmittance within a desired numerical range.

The agricultural film 100 can be used for various purposes such as a material for forming various agricultural and horticultural facilities such as a greenhouse, a material for protecting soil, or a storage material for storing soil. Above all, the agricultural film 100 is preferably used for forming a greenhouse.

Next, a resin composition for forming the agricultural film used according to the present invention, which is used to form the agricultural film 100, will be described.

The resin composition for forming the agricultural film (hereinafter, simply referred to as a resin composition) includes a thermoplastic resin, one or two or more hindered amine light stabilizers selected from the group consisting of the above-mentioned compound represented by General Formula (A1) and the above-mentioned compound represented by General Formula (A2), a synergist containing one or two or more selected from the above-mentioned benzoate compounds represented by General Formula (B), and the above-mentioned thermoplastic resin.

As to the formulation ratio of the above-mentioned components in the resin composition, for example, the formulation ratio in the light resistant layer described in the agricultural film may be adopted.

The resin composition may contain other additives commonly used for agricultural films within a range that does not impair the effects of the present invention, in addition to the above-mentioned components.

Examples of other additives include a phenolic antioxidant, a phosphorus-based antioxidant, a sulfur-based antioxidant, other hindered amine compounds, a nucleating agent, a processability improver, a filler, a plasticizer, a metal soap, an infrared absorber, an antistatic agent, an anti-fogging agent, an anti-misting agent, and a mildew-proofing agent. These compounds may be used alone or in combination of two or more thereof.

Examples of the phenolic antioxidant include 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzylthioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazin e, 2,2'-methylenebis(4-methyl-6-tert-butylphenol), bis[3,3-bis(4-hydroxy-3-tert-butylphenyl)butyric acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenz yl)phenyl]terephthalate, 1,3,5-tris(2,6-dimethyl-3-hydroxy-4-tert-butylbenzyl)isocyanurat e, 1,3,5-tris(3,5-di-tert-butyl-4-hydroxybenzyl)isocyanurate, 1,3,5-tris(3,5-di-tert-butyl-4-hydroxybenzyl)-2,4,6-trimethylben zene, 1,3,5-tris[(3,5-di-tert-butyl-4-hydroxyphenyl)propionyloxyethyl] isocyanurate, tetrakis[methylene-3-(3',5'-di-tert-butyl)-4'-hydroxyphenyl)prop ionate]methane, 2-tert-butyl-4-methyl-6-(2-acryloyloxy-3-tert-butyl-5-methylbenz yl)phenol, 3,9-bis[2-(3-tert-butyl-4-hydroxy-5-methylhydrocinnamoyloxy)-1,1 -dimethylethyl]-2,4,8,10-tetraoxaspiro[5.5]undecane, triethylene glycolbis[β-(3-tert-butyl-4-hydroxy-5-methylphenyl)propionate], and tocophenol.

Examples of the phosphorus-based antioxidant include triphenyl phosphite, tris(2,4-di-tert-butylphenyl)phosphite, tris(2,5-di-tert-butylphenyl)phosphite, tris(nonylphenyl)phosphite, tris(dinonylphenyl)phosphite, tris(mono-di mixed nonylphenyl)phosphite, diphenyl acid phosphite, 2,2'-methylenebis(4,6-di-tert-butylphenyl)octylphosphite, diphenyldecylphosphite, diphenyloctylphosphite, di(nonylphenyl)pentaerythritol diphosphite, phenyldiisodecylphosphite, tributylphosphite, tris(2-ethylhexyl)phosphite, tridecylphosphite, trilaurylphosphite, dibutyl acid phosphite, dilauryl acid phosphite, trilauryl trithiophosphite, bis(neopentyl glycol)-1,4-cyclohexanedimethyldiphosphite, bis(2,4-di-tert-butylphenyl)pentaerythritol diphosphite, bis(2,5-di-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, distearyl pentaerythritol diphosphite, tetra(C12-15 mixed alkyl)-4,4'-isopropylidene diphenylphosphite, bis[2,2'-methylenebis(4,6-diamylphenyl)]-isopropylidene diphenyl phosphite, tetratridecyl-4,4'-butylidenebis(2-tert-butyl-5-methylphenol)dip hosphite, hexa(tridecyl)-1,1,3-tris(2-methyl-5-tert-butyl-4-hydroxyphenyl) butane triphosphite, tetrakis(2,4-di-tert-butylphenyl)biphenylene diphosphonite, tris(2-[(2,4,7,9-tetrakis-tert-butyldibenzo[d,f][1,3,2]dioxaphos phepin-6-yl)oxy]ethyl)amine, 2-(1,1-dimethylethyl)-6-methyl-4-[3-[[2,4,8,10-tetrakis(1,1-dime thylethyl)dibenzo[d,f] [1,3,2]dioxaphosphepin-6-yl]oxy]propyl]phe nol, 9,10-dihydro-9-oxa-10-phosphaphenanthrene-10-oxide, and 2-butyl-2-ethylpropanediol-2,4,6-tri-tert-butylphenol monophosphite.

Examples of the sulfur-based antioxidant include dialkylthiodipropionates such as dilauryl, dimyristyl, myristyl stearyl, and distearyl esters of thiodipropionic acid, and β-alkyl mercaptopropionic acid esters of polyols such as pentaerythritol tetra(β-dodecylmercaptopropionate).

Examples of other hindered amine compounds include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidylbutane tetracarboxylate, tetrakis(1,2,2,6,6-pentamethyl-4-piperidylbutane tetracarboxylate, bis(2,2,6,6-tetramethyl-4-piperidyl)-di(tridecyl)-1,2,3,4-butane tetracarboxylate, bis (1,2,2,6,6-pentamethyl-4-piperidyl)-di(tridecyl)-1,2,3,4-buta ne tetracarboxylate, bis(1,2,2,6,6-pentamethyl-4-piperidyl)-2-butyl-2-(3,5-di-tert-bu tyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethan e polycondensate, 1,6-bis(2,2,6,6-tetramethyl-4-piperidylamino)hexane/2,4-dichloro -6-morpholino-s-triazine polycondensate, 1,6-bis(2,2,6,6-tetramethyl-4-piperidylamino)hexane/2,4-dichloro -6-tert-octylamino-s-triazine polycondensate, 1,5,8,12-tetrakis[2,4-bis(N-butyl-N-(2,2,6,6-tetramethyl-4-piper idyl)amino)-s-triazin-6-yl]-1,5,8,12-tetraazadodecane, 1,5,8,12-tetrakis[2,4-bis(N-butyl-N-(1,2,2,6,6-pentamethyl-4-pip eridyl)amino)-s-triazin-6-yl]-1,5,8,12-tetraazadodecane, 1,6,11-tris[2,4-bis(N-butyl-N-(2,2,6,6-tetramethyl-4-piperidyl)a mino)-s-triazin-6-ylaminoundecane, and 1,6(1,2,2,6,6-pentamethyl-4-piperidyl)amino) -s-triazin-6-ylaminoundecane.

Examples of the nucleating agent include aromatic carboxylic acid metal salts such as p-t-butyl aluminum benzoate and sodium benzoate; acidic phosphoric acid ester metal salts such as sodium bis(2,4-di-tert-butylphenyl)phosphate, lithium bis(2,4-di-tert-butylphenyl)phosphate, and sodium-2,2'-methylenebis(4,6-di-tert-butylphenyl)phosphate; and polyhydric alcohol derivatives such as dibenzylidene sorbitol and bis(methylbenzylidene) sorbitol.

The processability improver can be appropriately selected from known processability improvers and, for example, ethylenebisstearic acid amide or erucic acid amide may be used.

Examples of the filler include calcium carbonate, calcium oxide, calcium hydroxide, zinc hydroxide, zinc carbonate, zinc sulfide, magnesium oxide, magnesium hydroxide, magnesium carbonate, aluminum oxide, aluminum hydroxide, mineral silicates such as sodium alumina silicate, hydrocalumite, aluminum silicate, magnesium silicate, calcium silicate, and zeolite, activated clay, talc, clay, red iron oxide, asbestos, antimony trioxide, silica, glass beads, mica, sericite, glass flakes, asbestos, wollastonite, potassium titanate, PMF (mineral fiber), gypsum fiber[satin spar], zonolite, MOS (Magnesium Hydroxide Sulfate Hydrate, fibrous magnesium compound), phosphate fiber, glass fiber, carbon fiber, aramid fiber, and cellulose nanofiber. Among these, an inorganic filler may be used. The filler is preferably surface-treated with a titanium-based surface treatment agent or a silane-based surface treatment agent in order to improve an affinity with a resin.

Examples of the plasticizer include phthalic acid ester, dibasic acid ester, chlorinated paraffin, polyester, epoxidized ester, phosphoric acid ester, and trimellitic acid ester.

As the metal soap, for example, a salt of a metal such as magnesium, calcium, aluminum, or zinc with a saturated or unsaturated fatty acid such as lauric acid, myristic acid, palmitic acid, stearic acid, behenic acid, or oleic acid is used. The metal soap is used regardless of moisture content, melting point, particle size, composition of fatty acid, whether the production method is a double decomposition method by the reaction of a fatty acid salt of an alkali metal and a metal (hydr)oxide or a direct method in which a neutralization reaction of a fatty acid and a metal (hydr)oxide is carried out in the presence or absence of a solvent, or even in a case where there is an excess of either fatty acid or metal.

Examples of the infrared absorber include hydrotalcite compounds and lithium aluminum composite hydroxides.

These compounds may be used alone or in combination of two or more thereof.

The hydrotalcite compound may be a natural product or a synthetic product, or may be a compound modified with an alkali metal such as lithium. Preferred is a compound having a composition represented by General Formula: $Zn_xMg_yAl_2(OH)_2(x+y+2)CO_3 \cdot nH_2O$ (where x is 0 to 3, y is 1 to 6, x+y is 4 to 6, and n is 0 to 10), which can be used regardless of the presence or absence of water of crystallization or the presence or absence of a surface treatment.

The hydrotalcite compound may be one obtained by dehydrating water of crystallization, which may be coated with a higher fatty acid such as stearic acid, a higher fatty acid metal salt such as an alkali metal salt of oleic acid, an organic sulfonic acid metal salt such as an alkali metal salt of dodecylbenzene sulfonic acid, higher fatty acid amide, higher fatty acid ester, or wax.

Examples of the hydrotalcite compound include natural hydrotalcite and commercially available products under the trade names of DHT-4A (manufactured by Kyowa Chemical Industry Co., Ltd.), MAGCLEAR (manufactured by Toda Kogyo Corp.), MAGCELLER (manufactured by Kyowa Chemical Industry Co., Ltd.), and STABIACE HT-P (manufactured by Sakai Chemical Industry Co., Ltd.).

Examples of the lithium aluminum composite hydroxide include OPTIMA-SS (manufactured by Toda Kogyo Corp.) and MIZUKALAK (manufactured by Mizusawa Industrial Chemicals, Ltd.).

Examples of the antistatic agent include cationic antistatic agents such as fatty acid quaternary ammonium ion salts and polyamine quaternary salts; anionic antistatic agents such as higher alcohol phosphate ester salts, higher alcohol EO adducts, polyethylene glycol fatty acid esters, anionic type alkyl sulfonic acid salts, higher alcohol sulfuric acid ester salts, higher alcohol ethylene oxide adduct sulfuric acid ester salts, and higher alcohol ethylene oxide adduct phosphoric acid ester salts; nonionic antistatic agents such as polyhydric alcohol fatty acid esters, polyglycol phosphoric acid esters, and polyoxyethylene alkyl allyl ethers; amphoteric alkyl betaines such as alkyldimethylaminoacetic acid betaines; and amphoteric antistatic agents such as imidazoline type amphoteric activators.

Examples of the anti-fogging agent include sorbitan-based surfactants such as sorbitan fatty acid esters, for example, sorbitan monopalmitate, sorbitan monostearate, sorbitan monopalmitate, sorbitan monomontanate, sorbitan monooleate, and sorbitan dioleate, and alkylene oxide adducts thereof; glycerin-based surfactants such as glycerin fatty acid esters, for example, glycerin monopalmitate, glycerin monostearate, diglycerin distearate, triglycerin monostearate, tetraglycerin dimontanate, glycerin monooleate, diglycerin monooleate, diglycerin sesquioleate, tetraglycerin monooleate, hexaglycerin monooleate, hexaglycerin trioleate, tetraglycerin trioleate, tetraglycerin monolaurate, and hexaglycerin monolaurate, and alkylene oxide adducts thereof; polyethylene glycol-based surfactants such as polyethylene glycol monopalmitate and polyethylene glycol monostearate; alkylene oxide adducts of alkylphenols; esters of sorbitan/glycerin condensates with organic acids; and nonionic surfactants such as polyoxyethylene alkylamines, for example, polyoxyethylene (2 mol) stearylamine, polyoxyethylene (4 mol) stearylamine, polyoxyethylene (2 mol) stearylamine monostearate, and polyoxyethylene (4 mol) laurylamine monostearate, and fatty acid esters thereof.

Examples of the anti-misting agent include fluorine compounds having a perfluoroalkyl group or $\omega$-hydrofluoroalkyl group (especially fluorine-based surfactants), and silicone compounds having an alkylsiloxane group (especially silicone-based surfactants).

Examples of the mildew-proofing agent include organic mildew-proofing agents such as nitrogen-containing sulfur-containing mildew-proofing agents, organic bromine-based mildew-proofing agents, nitrogen-containing mildew-proofing agents, and arsenic-based mildew-proofing agents, and inorganic mildew-proofing agents such as silver compounds.

The agricultural film used according to the present invention may be produced by a method including a molding step of molding a resin composition into a film.

A known method is used in the molding step, and a melt extrusion molding method such as an inflation method or a die method, a solution casting method, a calender method, a coextrusion method by an inflation method or a die method, a multilayer processing method, a laminating method, or an internal or external heating method may be used. This gives a single or multiple layer agricultural film.

In addition, the method for producing the agricultural film may further include a mixing step of mixing the above-mentioned components to obtain a resin composition.

For the mixing step, for example, there is a method of premixing the components using various mixers such as a tumbler and a Henschel mixer, and then melt-kneading the components with a Banbury mixer, a roll, a Brabender, a single-screw kneading extruder, a twin-screw kneading extruder, or a kneader.

Alternatively, the resin composition may be produced without premixing the respective components, or by premixing only a part of the components, supplying the mixture to an extruder using a feeder and then melt-kneading the mixture. Alternatively, the resin composition may also be produced by using a resin composition which is obtained by premixing a part of the components, supplying the mixture to an extruder and then melt-kneading the mixture, as a masterbatch, mixing again with other components, and then melt-kneading the mixture.

In addition, the synthetic resin used in the mixing/kneading step may have a predetermined shape such as a powder shape or a pellet shape, or a fibrous shape.

According to the present invention, there is also provided a method of improving an ability of an agricultural film to suppress sulfur absorption. The method of improving an ability of an agricultural film to suppress sulfur absorption can improve the ability of the agricultural film 100 to suppress sulfur absorption by adding a benzoate compound as a synergist to a hindered amine light stabilizer.
As the predetermined hindered amine light stabilizer and the predetermined benzoate compound, those described in connection with the agricultural film are used.
As mentioned above, according to the present invention, there is also provided a method for growing a plant using the agricultural film 100. The method for growing a plant includes a step of disposing the agricultural film 100 in an agricultural or horticultural facility, a step of disposing a plant in the agricultural or horticultural facility, and a step of carrying out sulfur fumigation or sulfur spraying in the agricultural or horticultural facility. This makes it possible to realize an agricultural or horticultural facility with excellent long-term light resistance. Herein, a greenhouse is used as the agricultural or horticultural facility.

Examples

Hereinafter, the present invention will be described in detail with reference to examples, but the present invention is not limited to these examples.

<Preparation of resin composition>

(Test Example 1)

100 parts by mass of a thermoplastic resin (linear low density polyethylene), 0.2 parts by mass of a hindered amine light stabilizer of the following compound A1, 0.8 parts by mass of a benzoate compound of the following chemical formula B1 as a synergist, 0.05 parts by mass of a phenolic antioxidant (stearyl(3,5-di-tert-butyl-4-hydroxyphenyl)propionate), 0.05 parts by mass of a phosphorus-based antioxidant (tris(2,4-di-tert-butylphenyl)phosphite), and 0.05 parts by mass of a metal soap (calcium stearate) were mixed for 30 minutes using a rocking mixer (manufactured by Aichi Electric Co., Ltd.), and then the mixture was granulated using a twin-screw extruder (TEX-28V, manufactured by Nikko TPK Shoji Co., Ltd.) under conditions of an extrusion temperature of 190°C and a screw rotation speed of 150 rpm. The granulated pellets were dried at 60°C for 8 hours using a hot air dryer (WINDY OVEN WFO-1001SD, manufactured by EYELA). In this way, a pelletized resin composition was obtained.

(Test Examples 2 to 14)

Pelletized resin compositions were obtained by mixing and extrusion of resin composition components in the same manner as in Test Example 1, except that the thermoplastic resin, the hindered amine light stabilizer, and the benzoate compound were used in accordance with the formulation ratios shown in Table 1.
The compound A1 used was crushed in a mortar and allowed to stand overnight in a desiccator. The compound A2 was added using a liquid addition device.
Information on raw materials in Table 1 is shown below.

(Thermoplastic resin)

- Linear low density polyethylene (NF464N, density: 0. 918 kg/m$^3$, manufactured by Japan Polyethylene Corporation)
- Low density polyethylene (NUC-8230, density: 0.928 kg/m$^3$, manufactured by NUC Corporation)
- Ethylene-vinyl acetate copolymer resin (ULTRASEN 630, density: 0.936 kg/m$^3$, manufactured by Tosoh Corporation)

(Hindered amine light stabilizer)

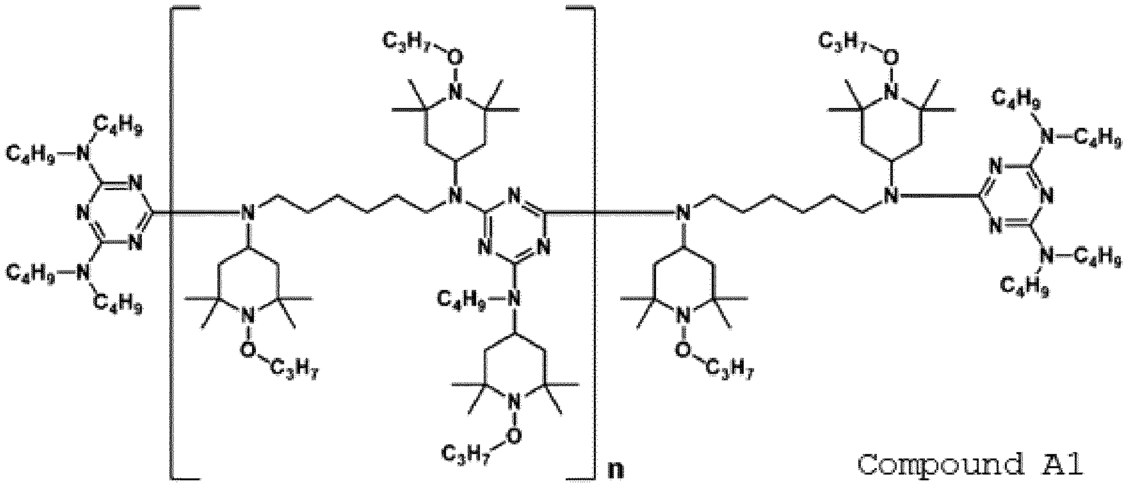

Compound A1

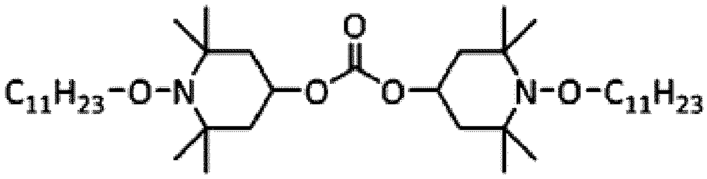

Compound A2

(Benzoate compound)

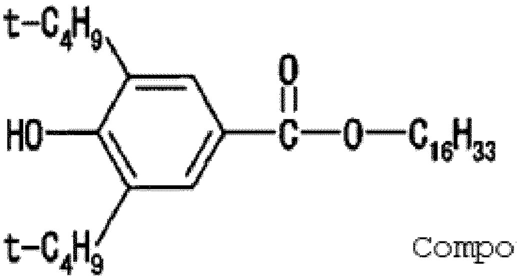

Compound B1

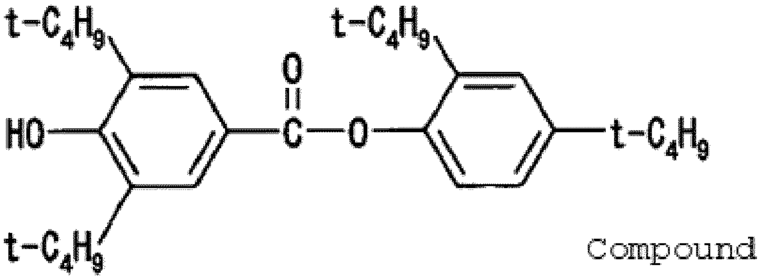

Compound B2

[Table 1]

| | | Unit | Test Example 1 | Test Example 2 | Test Example 3 | Test Example 4 | Test Example 5 | Test Example 6 | Test Example 7 | Test Example 8 | Test Example 9 | Test Example 10 | Test Example 11 | Test Example 12 | Test Example 13 | Test Example 14 |
|---|---|---|---|---|---|---|---|---|---|---|---|---|---|---|---|---|
| Thermoplastic resin | Linear low density polyethylene | Parts by mass | 100 | 100 | 100 | 100 | 100 | 100 | 100 | 100 | | 90 | 80 | 70 | 100 | 100 |
| | Low density polyethylene | | | | | | | | | | 100 | | | | | |
| | Ethylene-vinyl acetate copolymer resin | | | | | | | | | | | 10 | 20 | 30 | | |
| Hindered amine light stabilizer | Compound A1 | | 0.2 | 0.5 | 0.8 | 0.95 | | | | 0.5 | 0.5 | 0.5 | 0.5 | 0.5 | 0.99 | 0.1 |
| | Compound A2 | | | | | | 0.5 | 0.75 | 1.0 | | | | | | | |
| Benzoate compound | Compound B1 | | 0.8 | 0.5 | 0.2 | 0.05 | 0.5 | 0.75 | 1.0 | | 0.5 | 0.5 | 0.5 | 0.5 | 0.01 | 0.9 |
| | Compound B2 | | | | | | | | | 0.5 | | | | | | |
| Amount of sulfur before sulfur fumigation | $S_0$ | ppm | 5 | 5 | 5 | 5 | 5 | 5 | 5 | 5 | 5 | 5 | 5 | 5 | 5 | 5 |
| Amount of sulfur after sulfur fumigation | $S_1$ | | 146 | 181 | 205 | 230 | 185 | 213 | 192 | 190 | 171 | 187 | 197 | 174 | 245 | 140 |
| Sulfur uptake amount | $\Delta W = (S_1 - S_0)$ | ppm | 141 | 176 | 200 | 225 | 180 | 208 | 187 | 185 | 166 | 182 | 192 | 169 | 240 | 135 |
| | $\Delta W/H1$ | ppm/μm | 2.82 | 3.52 | 4.00 | 4.50 | 3.60 | 4.16 | 3.74 | 3.70 | 3.32 | 3.64 | 3.84 | 3.38 | 4.80 | 2.70 |

(continued)

| | | Unit | Test Example 1 | Test Example 2 | Test Example 3 | Test Example 4 | Test Example 5 | Test Example 6 | Test Example 7 | Test Example 8 | Test Example 9 | Test Example 10 | Test Example 11 | Test Example 12 | Test Example 13 | Test Example 14 |
|---|---|---|---|---|---|---|---|---|---|---|---|---|---|---|---|---|
| Light transmittance | $T_{290}$ (@290nm) | $ | 77.1 | 74.0 | 72.1 | 77.5 | 78.4 | 78.6 | 78.5 | 73.3 | 72.4 | 75.7 | 76.2 | 78.5 | 75.4 | 79.5 |
| | $T_{340}$ (@340nm) | % | 82.5 | 81.3 | 80.7 | 83.8 | 82.4 | 83.3 | 82.7 | 83.7 | 80.7 | 82.3 | 82.6 | 83.0 | 82.4 | 83.6 |
| | $T_{290}/T_{340}$ | | 0.93 | 0.91 | 0.89 | 0.92 | 0.95 | 0.94 | 0.95 | 0.88 | 0.90 | 0.92 | 0.92 | 0.95 | 0.92 | 0.95 |
| | $T_{450}$ (@450nm) | % | 86.1 | 86.2 | 87.2 | 85.8 | 86.6 | 86.7 | 86.3 | 86.0 | 86.8 | 86.5 | 86.3 | 85.9 | 86.3 | 85.9 |
| | $T_{660}$ (@660nm) | % | 82.0 | 90.5 | 90.7 | 86.8 | 89.7 | 91.7 | 89.1 | 91.6 | 91.0 | 89.0 | 89.0 | 87.5 | 88.8 | 86.4 |
| Haze | | % | 29.6 | 24.3 | 27.5 | 25.0 | 26.1 | 27.3 | 28.0 | 26.3 | 10.8 | 20.3 | 15.1 | 13.6 | 24.6 | 61.0 |

<Production of agricultural film>

Using the pelletized resin compositions obtained in Test Examples 1 to 14 and using an inflation molding machine, extrusion was carried out under conditions of a resin temperature: 190°C, a torque: 50 to 70 N-m, and an extrusion rate: 1.5 kg/h to produce single-layer agricultural films 1 to 14 having a thickness of 50 um. At this time, the thickness H1 of the agricultural film was 50 um, and the thickness H2 of the layer containing the hindered amine light stabilizer and the synergist was 50 um. The thickness was measured using a digital microscope on a cut surface obtained by cutting the agricultural film in a plate thickness direction.
Here, detailed production conditions of the agricultural film are as follows.
In a LABO PLASTOMILL 4C150-01 (manufactured by Toyo Seiki Co., Ltd.) which has an extrusion section of φ20 mm and L/D = 25 (full flight screw CR = 2.0), the obtained pellet was formed into a film by inflation molding using a ring die having a diameter of 25 mm and a slit width of 0.8 mm, and then the obtained film was wound up by a film take-up device manufactured by SUMTAK Corporation. The conditions of the extrusion section were a processing temperature of 190°C and a screw rotation speed of 60 rpm, and the winding speed was adjusted so as to obtain an agricultural film having a film thickness of 50 μm.
The sulfur uptake amount and the light transmittance of the obtained agricultural film were measured according to the following procedures.

<Measurement of sulfur uptake amount>

(Procedure A1)

Using the obtained agricultural film, the content (ppm) of the elemental sulfur in the agricultural film before the sulfur fumigation treatment was measured according to the following order of (1), (2), (4), and (5). The measured value is defined as $S_0$.

(Procedure A2)

Using the agricultural film for which the content of elemental sulfur before the sulfur fumigation treatment is measured in Procedure A1, the content (ppm) of the elemental sulfur in the agricultural film after the sulfur fumigation treatment was measured according to the following order of (1), (2), (3), (4), and (5) . The measured value is defined as $S_1$. Note that $S_1$ was an average value of four measured values.

(Procedure A3)

Then, using $S_0$ obtained in Procedure A1 and $S_1$ obtained in Procedure A2, the sulfur uptake amount ΔW (ppm) of the agricultural film was calculated based on Expression (I).

$$\Delta W\ (\mathrm{ppm}) = |S_1 - S_0| \cdots \text{Expression (I)}$$

(1): Preparation of test specimen

The agricultural film was cut out to produce a strip-shaped film test specimen A having a length of 13 cm and a width of 2.5 cm.

(2): Washing treatment

The test specimen A, 3 L of distilled water having a liquid temperature of 25°C, and a stirrer chip were put in a beaker having a diameter of 18 cm and stirred with a stirrer for 5 minutes. The test specimen A immersed in distilled water was taken out, and the moisture on the surface thereof was wiped off with KIMWIPE. After that, the test specimen A was dried by holding it in a suspended state for 30 minutes.

(3): Sulfur fumigation treatment

Fig. 2 shows an outline of fumigation equipment 200 used for the sulfur fumigation treatment.
First, a vinyl greenhouse 210 (Portable Fume Hood ECONO HOOD, manufactured by AS ONE Corporation) having a closed space having a substantially rectangular parallelepiped shape with a length of 50 cm, a width of 56 cm,

and a height of 60 cm was prepared.

Then, a stirrer 220 (Three-One Motor BL1200, manufactured by Shinto Scientific Co., Ltd.) was installed on a top surface 212 inside the vinyl greenhouse 210, and a heating device (hot plate 230) was installed on a bottom surface 214 inside the vinyl greenhouse 210. Then, an aluminum foil tray 240 (bottom area: 16 $cm^2$, width: 4 cm, depth: 4 cm, height: 2 cm) was disposed in the center of the hot plate 230 (C-MAG hot plate HP4, manufactured by IKA Company) . On the other hand, four of the test specimens A (test specimen 250) were installed in a suspended state inside the vinyl greenhouse 210. Four of the test specimens 250 were arranged so as to be appropriately separated from each other and to be located at approximately half the height of the vinyl greenhouse 210.

Then, the following sulfur fumigation operation was repeated four times.

(Sulfur fumigation operation)

First, 120 mg of powdery sulfur 260 was put into the tray 250. Subsequently, the stirrer 220 was rotated at a rotation speed of 180 rpm, and in that state, the tray 240 was heated at 190°C for 4 hours using the hot plate 230. At this time, the temperature of the hot plate 230 was elevated from 20°C to 190°C in about 4 minutes. Then, the hot plate 230 was stopped to complete the heating, and naturally cooled to room temperature over about 30 minutes.

(4): Surface treatment

Light irradiation was carried out on the test specimen A for 102 minutes under the following conditions and subsequently, water was sprayed on the test specimen A for 18 minutes together with the light irradiation under the following conditions. This operation for a total of 120 minutes was carried out as one cycle for a total of 60 cycles, whereby a surface treatment for a total of 120 hours was carried out on the test specimen A.

(Conditions of light irradiation)

The test specimen A was irradiated by a xenon lamp having a UV irradiation intensity of 60 $W/m^2$ and a wavelength of 300 to 400 nm for 120 hours using a xenon weather resistance tester under conditions of a black panel temperature of 65°C and a relative humidity of 50%, and using a borosilicate filter.

(5): Measurement of elemental sulfur content

200 mg of a sample obtained by cutting the test specimen A in a plate thickness direction was added to 5 g of a 70% nitric acid to obtain a nitric acid solution. The nitric acid solution was subjected to a pretreatment for liquefying the sample using a microwave wet decomposition apparatus (TOPwave, manufactured by Analytik Jena AG) under conditions of a temperature of 230°C and a pressure of 40 bar for 1 hour to obtain a measurement solution.

The content of elemental sulfur in the obtained measurement solution was measured using an ICP emission spectrometer (SPS 3500, manufactured by SII Nano Technology Inc.).

<Measurement of light transmittance>

Fig. 3(A),3(B) and 3(C) show diagrams for illustrating a procedure of pretreatment of a test specimen whose light transmittance is to be measured. Fig. 4 shows an outline of a spectrophotometer for measuring the transmittance of the test specimen.

(Pretreatment)

First, using the agricultural film to be measured in the section of <Measurement of sulfur uptake amount>, the film was cut out to produce a strip-shaped film test specimen B (test specimen 310) having a length of 10 cm and a width of 5 cm (Fig. 3(A)).

Then, the test specimen 310 was immersed in liquid paraffin 320 (manufactured by FUJIFILM Wako Pure Chemical Industries, Ltd.) (Fig. 3(B)).

After that, the test specimen 310 was taken out from the liquid paraffin 320 and held in a suspended state in the atmosphere for 30 minutes (Fig. 3(C)).

(Measurement procedure)

The pretreated test specimen 310 was placed on a spectrophotometer 300 (UV-visible near-infrared spectrophotometer V-750, manufactured by JASCO Corporation) shown in Fig. 4. The spectrophotometer 300 includes a light source 330 and a detector 340.

In the spectrophotometer 300, between the light source 330 and the detector 340 are arranged an entrance aperture 370 provided in a first slit, a test specimen 310 installed in the first slit on the side opposite to the light source 330 so as to cover the entrance aperture 370, an empty cell holder 350, and an exit aperture 380 provided in a second slit.

The light ray 360 irradiated from the light source 330 passes through the entrance aperture 370, the test specimen 310, the empty cell holder 350, and the exit aperture 380 to reach the detector 340.

The light transmittance (%) of the test specimen 310 at each wavelength in a case where the wavelength of the light ray 360 was varied from 200 nm to 700 nm was measured using the spectrophotometer 300 of Fig. 4.

Then, the obtained measured values were normalized such that the light transmittance at 400 nm was 85%.

Table 1 shows the value of Tx in a case where the light transmittance at a wavelength of Xnm after normalization is defined as Tx (%).

(Examples 1 to 12, and Comparative Examples 1 and 2)

Based on the above measurement results of the sulfur uptake amount and the light transmittance, the obtained agricultural films 1 to 12 were used as the agricultural films of Examples 1 to 12 in Table 2, and the obtained agricultural films 13 and 14 were used as the agricultural films of Comparative Examples 1 and 2 in Table 2. Examples 3 and 4, where the obtained agricultural films 3 and 4 were used as the agricultural films, are Reference Examples not falling within the scope of the present invention.

The agricultural films of Examples and Comparative Examples were evaluated based on the following evaluation items. The results are shown in Table 2.

[Table 2]

| | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|
| Agricultural film (Test Example) | 1 | 2 | 3 | 4 | 5 | 6 | 7 | 8 | 9 | 10 | 11 | 12 | 13 | 14 |
| Long-term weather resistance | ○ | ○ | ○ | ○ | ○ | ○ | ○ | ○ | ○ | ○ | ○ | ○ | × | × |
| Transparency | ○ | ○ | ○ | ○ | ○ | ○ | ○ | ○ | ○ | ○ | ○ | ○ | ○ | × |

(Long-term weather resistance)

An accelerated weathering test was carried out in accordance with ISO4892-2, by irradiating the agricultural films of Examples and Comparative Examples by a xenon lamp having a UV irradiation intensity of 60 $W/m^2$ and a wavelength of 300 to 400 nm for 120 hours under conditions of a black panel temperature of 65°C and a relative humidity of 50%, and using a borosilicate filter. At this time, 120 minutes was set as one cycle, and a light irradiation cycle of irradiation with light for 102 minutes and then irradiation with light for 18 minutes together with water spraying was carried out for 60 cycles in total for 120 hours.

During the accelerated weathering test, the (sulfur fumigation operation) was carried out once every 120 hours in the same manner as in the section of (3): Sulfur fumigation treatment.

Then, at 0 h, 840 h, 1200 h, and 2040 h of the accelerated weathering test, a residual tensile strength ratio (%) of each film at a test speed of 500 mm/min was measured in accordance with JIS K7161-1 using AG-Xplus (manufactured by Shimadzu Corporation) . The residual tensile strength ratio (%) was defined as a rate of decrease in tensile strength in a case where the tensile strength of the film before the accelerated weathering test was taken as 100%.

As a result, at 1200 hours of the accelerated weathering test, the residual tensile strength ratio of Comparative Example 1 was lower than those of Examples 1 to 12 and Comparative Example 2, and at 2040 hours of the accelerated weathering test, the residual tensile strength ratios of Comparative Example 1 and Comparative Example 2 were lower than those of Examples 1 to 12. Therefore, it was shown that the agricultural films of Examples 1 to 12 had excellent long-term weather resistance as compared with Comparative Examples 1 and 2.

(Transparency)

Haze (haze value: %) was measured in accordance with JIS K7136 for the agricultural films of Examples and Comparative Examples. The haze values of the agricultural films 1 to 12 of Examples 1 to 12 were low enough to be used without any practical problems. On the other hand, the haze value of the agricultural film 14 of Comparative Example 2 was significantly higher than that of each Example (Table 1) .

In addition, the surfaces of the agricultural films of Examples 1 to 12 and Comparative Example 2 were observed. As a result, no bloom was observed on the surfaces of the agricultural films of Examples 1 to 12, but bloom was observed on the surfaces of the agricultural film of Comparative Example 2.

Therefore, in the agricultural film 14 of Comparative Example 2, it is presumed that the haze value was increased due to the bloom from the layer containing the hindered amine light stabilizer and the synergist.

(Reference Example 1)

100 parts by mass of a thermoplastic resin (linear low density polyethylene), 0.4 parts by mass of a hindered amine light stabilizer of the compound A1, 0.1 parts by mass of a benzoate compound represented by the chemical formula B1, and 0.05 parts by mass of an ultraviolet absorber (triazine-based UV absorber, 2,4-bis(2,4-dimethylphenyl)-6-(2-hydroxy-4-n-octyloxyphenyl)-1,3 ,5-triazine, CYASORB UV1164, manufactured by Cytec Industries Inc.) were mixed for 30 minutes using a rocking mixer (manufactured by Aichi Electric Co., Ltd.), and then the mixture was granulated using a twin-screw extruder (TEX-28V, manufactured by Nikko TPK Shoji Co., Ltd.) under conditions of an extrusion temperature of 190°C and a screw rotation speed of 150 rpm. The granulated pellets were dried at 60°C for 8 hours using a hot air dryer (WINDY OVEN WFO-1001SD, manufactured by EYELA) . In this way, a pelletized resin composition was obtained.

Using the obtained pelletized resin composition, an agricultural film 15 having a thickness of 50 um was produced in the same manner as in the section of <Production of agricultural film>.

With respect to the agricultural film 15, the light transmittance was measured at a wavelength of 200 nm to 700 nm in the same manner as in the section of (Light transmittance). The obtained measured values were normalized such that the light transmittance at 400 nm was 85%.

As a result, the agricultural film 15 exhibited a light transmittance $T_{290}$ at 290 nm of 53.1%, a light transmittance $T_{340}$ at 340 nm of 71.2%, and a $T_{290}/T_{340}$ of 0.75.

It was shown that the agricultural films of Examples 1 to 12 had excellent long-term weather resistance as compared with Comparative Example 1 and had excellent transparency as compared with Comparative Example 2. Such agricultural films are suitable as members used for growing agricultural crops or plants, and can be used particularly as materials for greenhouses.

In addition, the ability of the agricultural film to suppress sulfur absorption can be improved by appropriately blending the hindered amine light stabilizer and the benzoate compound. Therefore, the agricultural films of the Examples can be suitably used for sulfur fumigation/sulfur spraying carried out in a case of growing plants or agricultural crops.

EXPLANATION OF REFERENCE SIGNS

| | |
|---|---|
| 10 | weather resistant layer |
| 20 | base layer |
| 100 | agricultural film |
| 200 | fumigation equipment |
| 210 | vinyl greenhouse |
| 212 | top surface |
| 214 | bottom surface |
| 220 | stirrer |
| 230 | hot plate |
| 240 | tray |
| 250 | test specimen |
| 260 | sulfur |
| 300 | spectrophotometer |
| 310 | test specimen |
| 320 | liquid paraffin |
| 330 | light source |
| 340 | detector |
| 350 | cell holder |
| 360 | light ray |
| 370 | entrance aperture |
| 380 | exit aperture |

## Claims

1. Use of an agricultural film in a growing method of sulfur fumigation or sulfur spraying, comprising:

a layer containing one or two or more hindered amine light stabilizers selected from the group consisting of a compound represented by General Formula (A1) and a compound represented by General Formula (A2), and a synergist containing one or two or more selected from benzoate compounds represented by General Formula (B),

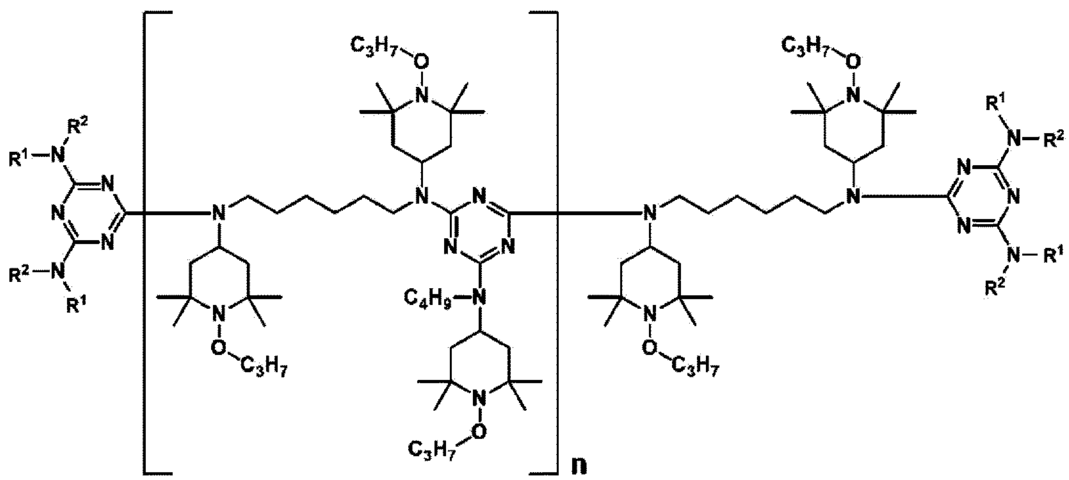

(A1)

(in General Formula (A1), $R^1$ and $R^2$ may be the same or different from each other and each independently represent an alkyl group having 1 to 8 carbon atoms, and in General Formula (A1), n is an integer of 0 or more.),

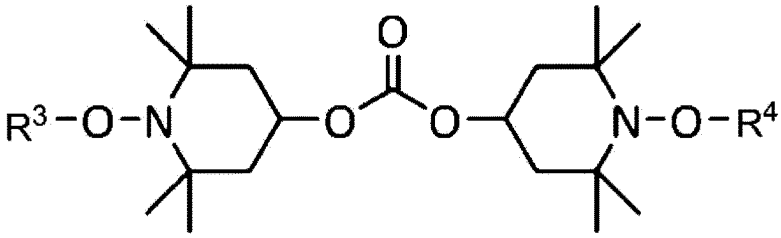

(A2)

(in General Formula (A2), $R^3$ and $R^4$ may be the same or different from each other and each independently represent an alkyl group having 1 to 20 carbon atoms.),

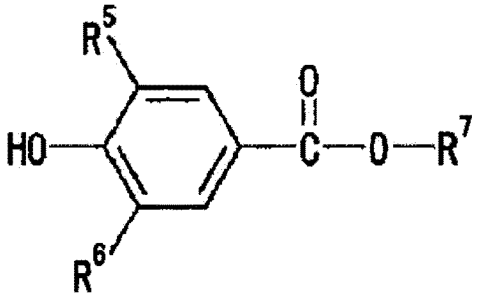

(B)

(in General Formula (B), $R^5$ and $R^6$ may be the same or different from each other and each independently represent an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms.),
wherein X and Y satisfy $0.2/0.8 \leq X/Y \leq 0.6/0.4$, in a case where the content of the hindered amine light stabilizer in terms of mass in the layer is defined as X and the content of the synergist in terms of mass in the layer is defined as Y, and
wherein $\Delta W/H1$ is equal to or more than 2.80 ppm/um and equal to or less than 4.70 ppm/μm, in a case where a sulfur uptake amount measured according to Procedure A is defined as $\Delta W$ and a thickness of the agricultural film is defined as H1,
<Procedure A>

Procedure A1: using the agricultural film, the content (ppm) of an elemental sulfur in the agricultural film before a sulfur fumigation treatment is measured according to an order of (1), (2), (4), and (5), and the measured value is defined as $S_0$;
Procedure A2: using the agricultural film to be measured in Procedure A1, a content (ppm) of the elemental sulfur in the agricultural film after the sulfur fumigation treatment is measured according to an order of (1), (2), (3), (4), and (5), and the measured value is defined as $S_1$, provided that $S_1$ is an average value of four measured values; and
Procedure A3: using $S_0$ obtained in Procedure A1 and $S_1$ obtained in Procedure A2, a sulfur uptake amount (ppm) of the agricultural film is calculated based on Expression (I),

$$|S_1 - S_0| \cdots \text{Expression (I)}$$

(1): preparation of test specimen
the agricultural film is cut out to produce a strip-shaped film test specimen A having a length of 13 cm and a width of 2.5 cm;
(2): washing treatment
the test specimen A is immersed in distilled water having a liquid temperature of 25°C, taken out of the distilled water, and then dried;
(3): sulfur fumigation treatment

a vinyl greenhouse having a closed space having a substantially rectangular parallelepiped shape with a length of 50 cm, a width of 56 cm, and a height of 60 cm is prepared, then, a stirrer is installed on a top surface inside the vinyl greenhouse, a heating device is installed on a bottom surface

inside the vinyl greenhouse, an aluminum foil tray is disposed on the heating device, four of the test specimens A are installed in a suspended state inside the vinyl greenhouse, and
then, the following sulfur fumigation operation is repeated four times;
(sulfur fumigation operation)
120 mg of powdery sulfur is put into the tray, and subsequently, a rotation speed of the stirrer is set to 180 rpm, and the tray is heated at 190°C for 4 hours;

(4): surface treatment

light irradiation is carried out on the test specimen A for 102 minutes under the following conditions and subsequently, water is sprayed on the test specimen A for 18 minutes together with the light irradiation under the following conditions, and this operation for a total of 120 minutes is carried out as one cycle for a total of 60 cycles, whereby a surface treatment for a total of 120 hours is carried out on the test specimen A;
(conditions of light irradiation)
the test specimen A is irradiated by a xenon lamp having an irradiation intensity of 60 $W/m^2$ under conditions of a temperature of 65°C and a relative humidity of 50%; and

(5): measurement of elemental sulfur content
200 mg of a sample obtained by cutting the test specimen A in a plate thickness direction is added to 5 g of a 70% nitric acid to obtain a nitric acid solution, the nitric acid solution is subjected to a pretreatment for liquefying the sample using a microwave wet decomposition method to obtain a measurement solution, and the content of elemental sulfur in the obtained measurement solution is measured using an ICP emission spectrometer.

**2.** Use of the agricultural film according to claim 1,

wherein $T_{290}/T_{340}$ is equal to or more than 0.76 and equal to or less than 1.00, in a case where a light transmittance of 290 nm is defined as $T_{290}$ and a light transmittance of 340 nm is defined as $T_{340}$, the light transmittance being measured according to Procedure B,
<Procedure B>

Procedure B1: using the agricultural film to be measured in Procedure A, the film is cut out to produce a strip-shaped film test specimen B having a length of 10 cm and a width of 5 cm, and subsequently, the test specimen B is immersed in liquid paraffin, and the taken-out test specimen B is held in a suspended state for 30 minutes to carry out a pretreatment on the test specimen B; and
Procedure B2: the test specimen B pretreated in Procedure B1 is placed in a spectrophotometer, a light transmittance (%) is measured at a wavelength of 200 nm to 700 nm, the obtained measured value is normalized such that a light transmittance at 400 nm is 85%, and a light transmittance at a wavelength of Xnm after normalization is expressed as Tx (%).

**3.** Use of the agricultural film according to claim 1 or 2,
wherein a light transmittance $T_{660}$ at 660 nm in the agricultural film, as measured according to Procedure B, is equal to or more than 80%.

**4.** Use of the agricultural film according to any one of claims 1 to 3,

wherein the compound represented by General Formula (A1) includes the following compound A1, and
the compound represented by General Formula (A2) includes the following compound A2.

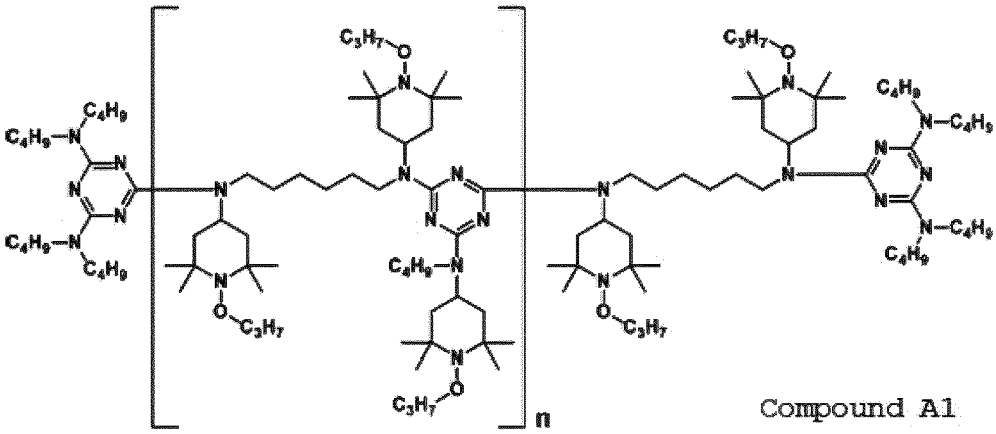

Compound A1

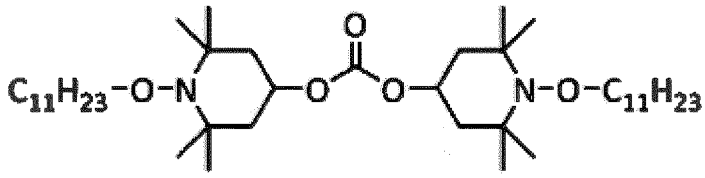

Compound A2

5. Use of the agricultural film according to any one of claims 1 to 4, wherein the benzoate compound represented by General Formula (B) includes at least one of the following compound B1 or compound B2.

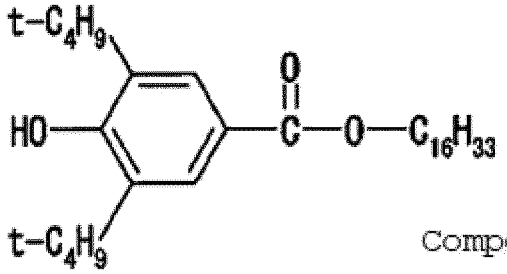

Compound B1

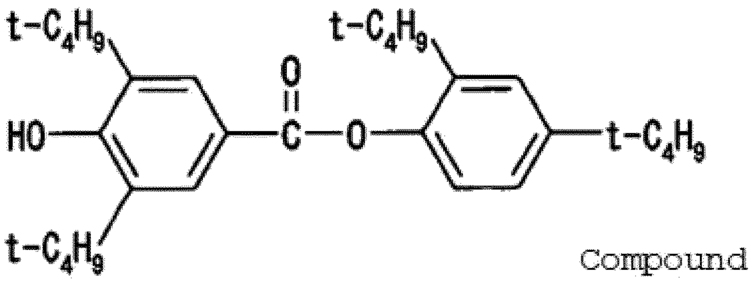

Compound B2

6. Use of the agricultural film according to any one of claims 1 to 5, wherein the layer contains a thermoplastic resin.

7. Use of the agricultural film according to claim 6, wherein the thermoplastic resin contains linear low density polyethylene or low density polyethylene.

8. Use of the agricultural film according to claim 6 or 7, wherein a total content of the hindered amine light stabilizer and the synergist in the layer is equal to or more than 0.01 parts by mass and equal to or less than 10 parts by mass with respect to 100 parts by mass of the thermoplastic resin.

**9.** Use of the agricultural film according to any one of claims 1 to 8 for forming a greenhouse.

**10.** A method for growing a plant, comprising:

a step of disposing the agricultural film according to any one of claims 1 to 9 in a greenhouse;
a step of disposing a plant in the greenhouse; and
a step of carrying out sulfur fumigation or sulfur spraying in the greenhouse.

**11.** Use of a resin composition comprising a thermoplastic resin, one or two or more hindered amine light stabilizers and a synergist for forming a layer of an agricultural film used in a growing method of sulfur fumigation or sulfur spraying,

wherein the one or two or more hindered amine light stabilizers are selected from the group consisting of a compound represented by General Formula (A1) and a compound represented by General Formula (A2), and wherein the synergist contains one or two or more selected from benzoate compounds represented by General Formula (B),

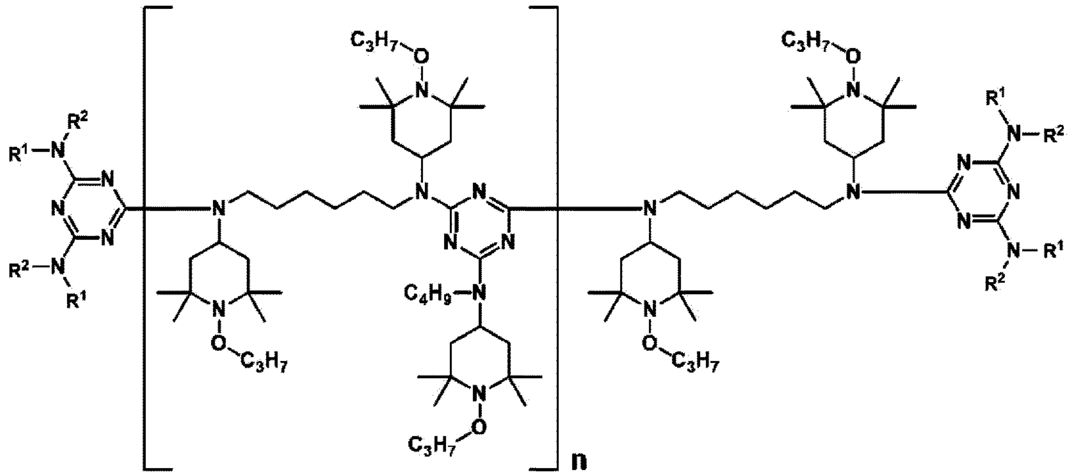

(A1)

(in General Formula (A1), $R^1$ and $R^2$ may be the same or different from each other and each independently represent an alkyl group having 1 to 8 carbon atoms, and in General Formula (A1), n is an integer of 0 or more.),

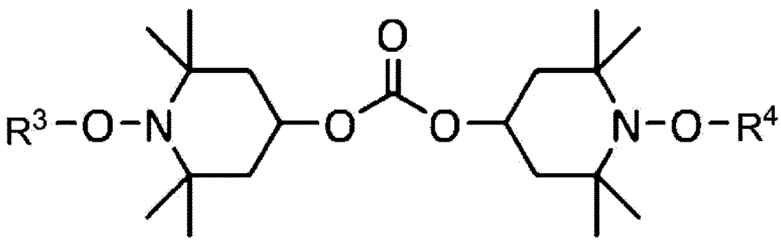

(A2)

(in General Formula (A2), $R^3$ and $R^4$ may be the same or different from each other and each independently represent an alkyl group having 1 to 20 carbon atoms.),

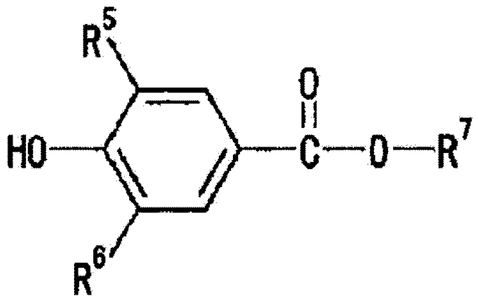

(B)

(in General Formula (B), $R^5$ and $R^6$ may be the same or different from each other and each independently represent an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms.), wherein X and Y satisfy $0.2/0.8 \leq X/Y \leq 0.6/0.4$, in a case where the content of the hindered amine light stabilizer in terms of mass in the layer is defined as X and the content of the synergist in terms of mass in the layer is defined as Y.

**12.** Use of one or two or more hindered amine light stabilizers and a synergist for forming a layer of an agricultural film used in a growing method of sulfur fumigation or sulfur spraying,

wherein the one or two or more hindered amine light stabilizers are selected from the group consisting of a compound represented by General Formula (A1) and a compound represented by General Formula (A2), and wherein the synergist contains one or two or more selected from benzoate compounds represented by General Formula (B),

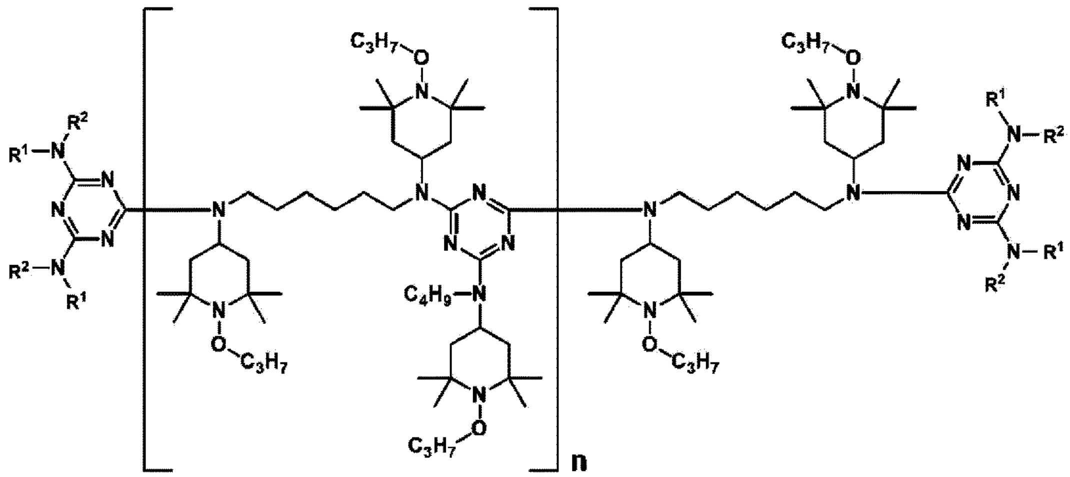

(A1)

(in General Formula (A1), $R^1$ and $R^2$ may be the same or different from each other and each independently represent an alkyl group having 1 to 8 carbon atoms, and in General Formula (A1), n is an integer of 0 or more.),

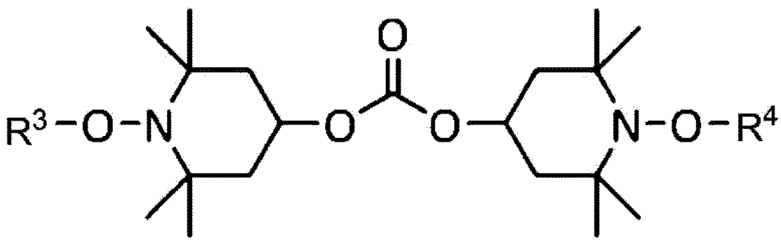

(A2)

(in General Formula (A2), $R^3$ and $R^4$ may be the same or different from each other and each independently represent an alkyl group having 1 to 20 carbon atoms.),

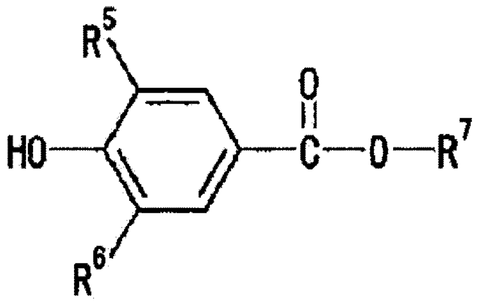

(B)

(in General Formula (B), $R^5$ and $R^6$ may be the same or different from each other and each independently represent an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms.), wherein X and Y satisfy $0.2/0.8 \leq X/Y \leq 0.6/0.4$, in a case where the content of the hindered amine light stabilizer in terms of mass in the layer is defined as X and the content of the synergist in terms of mass in the layer is defined as Y.

**13.** A method of improving an ability of an agricultural film to suppress sulfur absorption, comprising:

blending one or two or more hindered amine light stabilizers and a synergist to form a layer of the agricultural film, wherein the one or two or more hindered amine light stabilizers are selected from the group consisting of a compound represented by General Formula (A1) and a compound represented by General Formula (A2), and wherein the synergist contains one or two or more selected from benzoate compounds represented by General Formula (B),

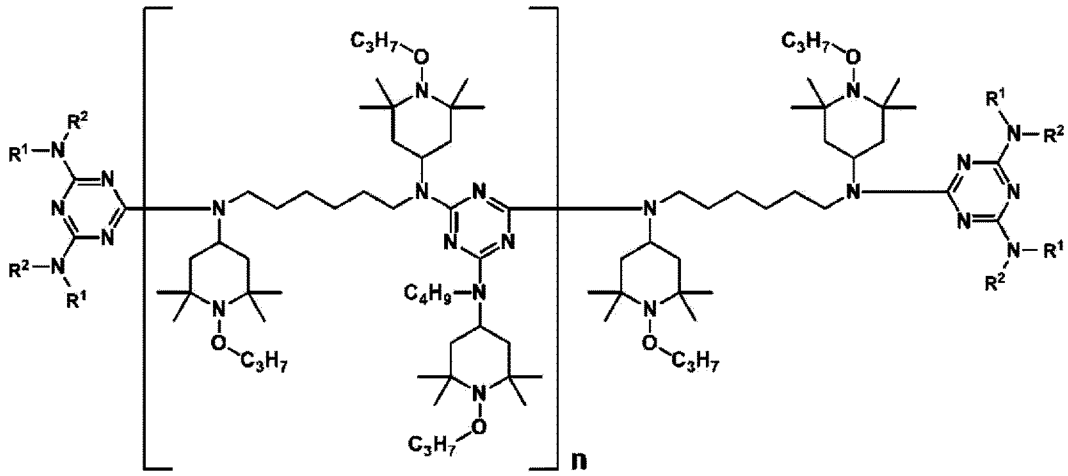

(A1)

(in General Formula (A1), $R^1$ and $R^2$ may be the same or different from each other and each independently represent an alkyl group having 1 to 8 carbon atoms, and in General Formula (A1), n is an integer of 0 or more.),

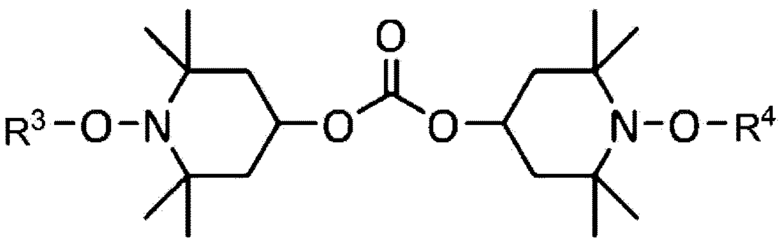

(A2)

(in General Formula (A2), $R^3$ and $R^4$ may be the same or different from each other and each independently represent an alkyl group having 1 to 20 carbon atoms.),

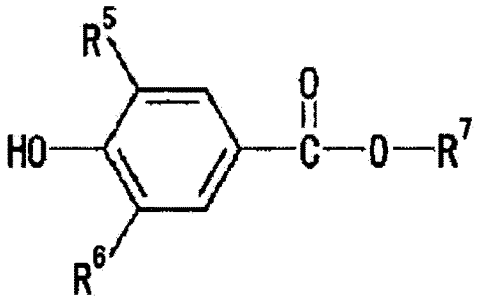

(B)

(in General Formula (B), $R^5$ and $R^6$ may be the same or different from each other and each independently represent an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms.), wherein X and Y satisfy $0.2/0.8 \leq X/Y \leq 0.6/0.4$, in a case where the content of the hindered amine light stabilizer in terms of mass in the layer is defined as X and the content of the synergist in terms of mass in the layer is defined as Y.

**Patentansprüche**

1. Verwendung einer Landwirtschaftsfolie in einem Anbauverfahren von Schwefelbegasung oder Schwefelbesprühung, umfassend:

eine Schicht, enthaltend eine oder zwei oder mehrere gehinderte Aminlichtstabilisatoren, ausgewählt aus der Gruppe, bestehend aus einer Verbindung, dargestellt durch die Allgemeine Formel (A1), und einer Verbindung, dargestellt durch die Allgemeine Formel (A2), und
einen Synergisten, enthaltend eine oder zwei oder mehrere, ausgewählt aus Benzoatverbindungen, dargestellt durch die Allgemeine Formel (B),

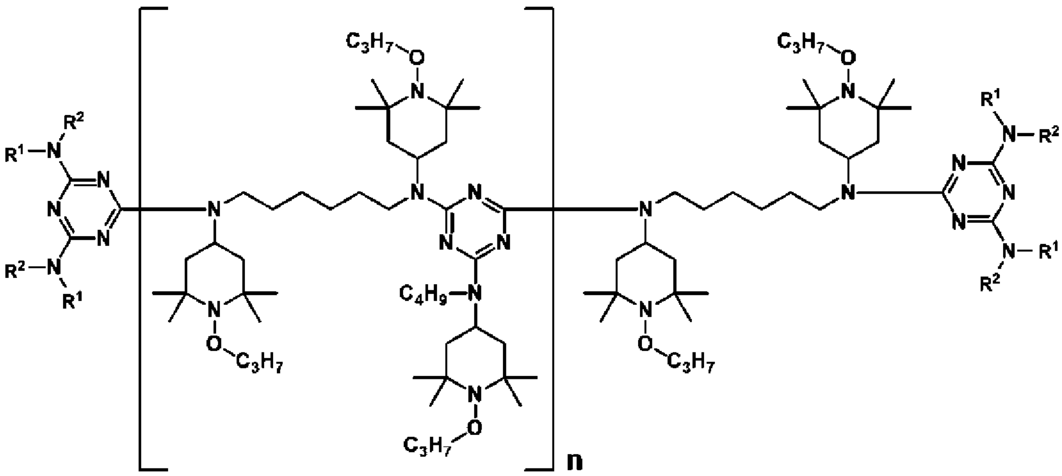

(A1)

(in der Allgemeinen Formel (A1) können $R^1$ und $R^2$ gleich oder verschieden voneinander sein und stellen jeweils unabhängig eine Alkylgruppe mit 1 bis 8 Kohlenstoffatomen dar, und in der Allgemeinen Formel (A1) ist n eine ganze Zahl von 0 oder mehr.),

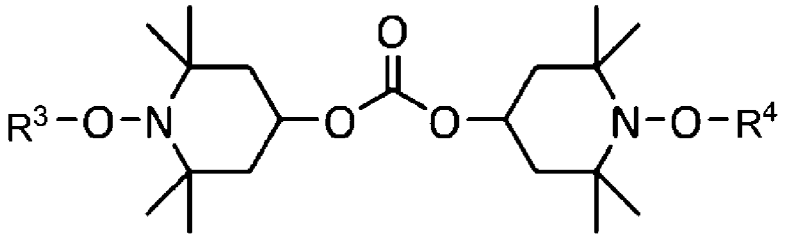

(A2)

(in der Allgemeinen Formel (A2) können $R^3$ und $R^4$ gleich oder verschieden voneinander sein und stellen jeweils unabhängig eine Alkylgruppe mit 1 bis 20 Kohlenstoffatomen dar.),

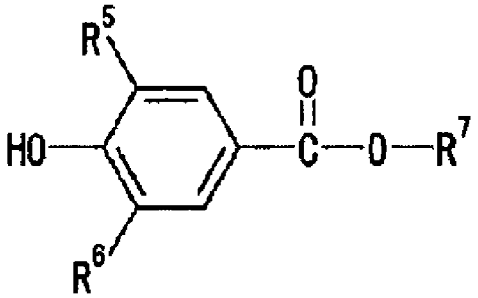

(B)

(in der Allgemeinen Formel (B) können $R^5$ und $R^6$ gleich oder verschieden voneinander sein und stellen jeweils unabhängig eine Alkylgruppe mit 1 bis 8 Kohlenstoffatomen dar, und stellt $R^7$ eine Alkylgruppe mit 1 bis 30 Kohlenstoffatomen, eine Arylgruppe mit 6 bis 30 Kohlenstoffatomen oder eine Alkylarylgruppe mit 7 bis 30 Kohlenstoffatomen dar.),
wobei X und Y in einem Fall, wo der massebezogene Gehalt des gehinderten Aminlichtstabilisators in der Schicht als X definiert wird und der massebezogene Gehalt des Synergisten in der Schicht als Y definiert wird, $0{,}2/0{,}8 \leq X/Y \leq 0{,}6/0{,}4$ genügen, und
wobei $\Delta W/H1$ in einem Fall, wo eine Schwefelaufnahmemenge, gemessen in Übereinstimmung mit Vorgehen A, als $\Delta W$ definiert wird und eine Dicke der Landwirtschaftsfolie als H1 definiert wird, gleich oder mehr als 2,80 ppm/$\mu$m und gleich oder weniger als 4,70 ppm/$\mu$m beträgt,
<Vorgehen A>

Vorgehen A1: unter Verwendung der Landwirtschaftsfolie wird der Gehalt (ppm) eines elementaren Schwefels in der Landwirtschaftsfolie vor einer Schwefelbegasungsbehandlung gemäß einer Reihenfolge von (1), (2), (4) und (5) gemessen, und der gemessene Wert wird als $S_0$ definiert;
Vorgehen A2: unter Verwendung der in Vorgehen A1 zu messenden Landwirtschaftsfolie wird ein Gehalt (ppm) des elementaren Schwefels in der Landwirtschaftsfolie nach der Schwefelbegasungsbehandlung gemäß einer Reihenfolge von (1), (2), (3), (4) und (5) gemessen, und der gemessene Wert wird als $S_1$ mit der Maßgabe definiert, dass $S_1$ ein Durchschnittswert von vier gemessenen Werten ist; und
Vorgehen A3: unter Verwendung von $S_0$, erhalten in Vorgehen A1, und $S_1$, erhalten in Vorgehen A2, wird eine Schwefelaufnahmemenge (ppm) der Landwirtschaftsfolie auf Basis von Ausdruck (I) berechnet,

$$|S_1-S_0| \cdots \text{Ausdruck (I)}$$

(1): Bereitstellung des Probenkörpers
die Landwirtschaftsfolie wird ausgeschnitten, um einen streifenförmigen Folienprobenkörper A mit einer Länge von 13 cm und einer Breite von 2,5 cm herzustellen;
(2): Waschbehandlung
der Probenkörper A wird in destilliertes Wasser mit einer Flüssigkeitstemperatur von 25°C eingetaucht, aus dem destillierten Wasser herausgenommen, und danach getrocknet;
(3): Schwefelbegasungsbehandlung

ein Vinylgewächshaus, aufweisend einen geschlossenen Raum mit einer im Wesentlichen rechteckigen Parallelepipedform mit einer Länge von 50 cm, einer Breite von 56 cm und einer Höhe

von 60 cm, wird bereitgestellt, danach wird ein Rührer auf einer oberen Oberfläche im Inneren des Vinylgewächshauses eingesetzt, eine Erwärmungsvorrichtung wird auf einer unteren Oberfläche im Inneren des Vinylgewächshaus eingesetzt, eine Aluminiumfolienschale wird auf der Erwärmungsvorrichtung angeordnet, vier der Probenkörper A werden in einem suspendierten Zustand im Inneren des Vinylgewächshaus eingesetzt, und
danach wird der folgende Schwefelbegasungsvorgang viermal wiederholt;
(Schwefelbegasungsvorgang)
120 mg pulverförmiger Schwefel werden in die Schale gelegt, und anschließend wird eine Rotationsgeschwindigkeit des Rührers auf 180 rpm eingestellt, und die Schale wird bei 190°C für 4 Stunden erwärmt;

(4): Oberflächenbehandlung

Lichtbestrahlung auf den Probenkörper A wird unter den folgenden Bedingungen für 102 Minuten durchgeführt, und anschließend wird Wasser zusammen mit der Lichtbestrahlung auf den Probenkörper A unter den folgenden Bedingungen für 18 Minuten gesprüht, und dieser Vorgang für insgesamt 120 Minuten wird als ein Zyklus für insgesamt 60 Zyklen durchgeführt, wodurch eine Oberflächenbehandlung an dem Probenkörper A für insgesamt 120 Stunden durchgeführt wird;
(Bedingungen der Lichtbestrahlung)
der Probenkörper A wird durch eine Xenonlampe mit einer Bestrahlungsintensität von 60 $W/m^2$ unter Bedingungen einer Temperatur von 65°C und einer relativen Luftfeuchtigkeit von 50% bestrahlt; und

(5): Messung eines elementaren Schwefelgehalts
200 mg einer Probe, erhalten durch Schneiden des Probenkörpers A in einer Plattendickenrichtung, werden zu 5 g einer 70%-igen Salpetersäure gegeben, um eine Salpetersäurelösung zu erhalten, wobei die Salpetersäurelösung einer Vorbehandlung zur Verflüssigung der Probe unter Verwendung eines Mikrowellennasszersetzungsverfahrens unterzogen wird, um eine Messlösung zu erhalten, und der Gehalt von elementarem Schwefel in der erhaltenen Messlösung wird unter Verwendung eines ICP-Emissionsspektrometers gemessen.

**2.** Verwendung der Landwirtschaftsfolie nach Anspruch 1,

wobei $T_{290}/T_{340}$ in einem Fall, wo eine Lichtdurchlässigkeit bei 290 nm als $T_{290}$ definiert wird und eine Lichtdurchlässigkeit bei 340 nm als $T_{340}$ definiert wird, wobei die Lichtdurchlässigkeit in Übereinstimmung mit Vorgehen B gemessen wird, gleich oder mehr als 0,76 und gleich oder weniger als 1,00 beträgt,
<Vorgehen B>

Vorgehen B1: unter Verwendung der in Vorgehen A zu messenden Landwirtschaftsfolie wird die Folie ausgeschnitten, um einen streifenförmigen Folienprobenkörper B mit einer Länge von 10 cm und einer Breite von 5 cm herzustellen, und anschließend wird der Probenkörper B in flüssiges Paraffin eingetaucht, und der herausgenommene Probenkörper B wird in einem suspendierten Zustand für 30 Minuten gehalten, um eine Vorbehandlung an dem Probenkörper B durchzuführen; und
Vorgehen B2: der in Vorgehen B1 vorbehandelte Probenkörper B wird in ein Spektrophotometer eingebracht, eine Lichtdurchlässigkeit (%) wird bei einer Wellenlänge von 200 nm bis 700 gemessen, der erhaltene Messwert wird dergestalt normalisiert, dass eine Lichtdurchlässigkeit bei 400 nm 85% beträgt, und eine Lichtdurchlässigkeit bei einer Wellenlänge von Xnm nach der Normalisierung wird als Tx (%) ausgedrückt.

**3.** Verwendung der Landwirtschaftsfolie nach Anspruch 1 oder 2,
wobei eine Lichtdurchlässigkeit $T_{660}$ bei 660 nm in der Landwirtschaftsfolie, gemessen in Übereinstimmung mit Vorgehen B, gleich oder mehr als 80% beträgt.

**4.** Verwendung der Landwirtschaftsfolie nach einem der Ansprüche 1 bis 3,

wobei die Verbindung, dargestellt durch die Allgemeine Formel (A1), die nachstehende Verbindung A1 einschließt, und
die Verbindung, dargestellt durch die Allgemeine Formel (A2), die nachstehende Verbindung A2 einschließt.

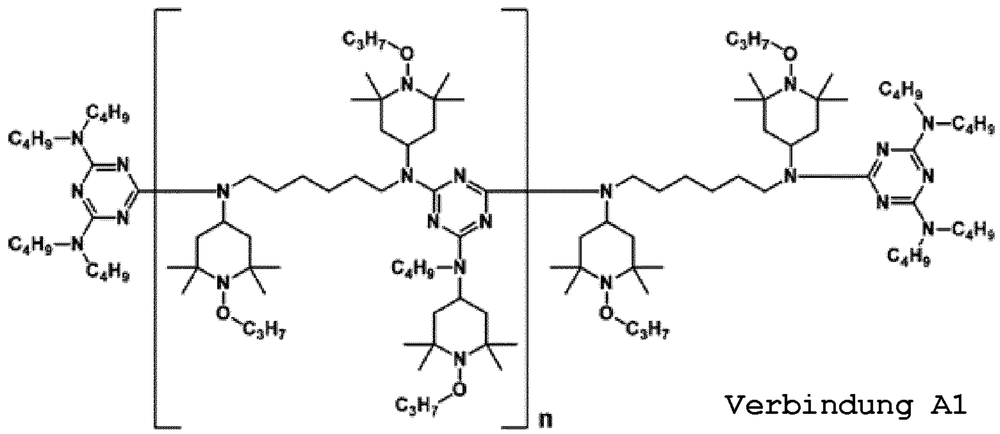

Verbindung A1

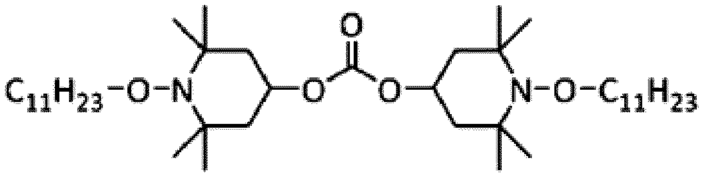

Verbindung A2

5. Verwendung der Landwirtschaftsfolie nach einem der Ansprüche 1 bis 4, wobei die Benzoatverbindung, dargestellt durch die Allgemeine Formel (B), mindestens eine der nachstehenden Verbindung B1 oder Verbindung B2 einschließt.

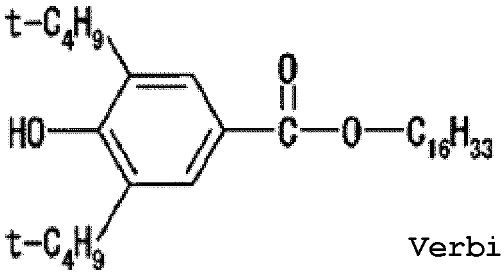

Verbindung B1

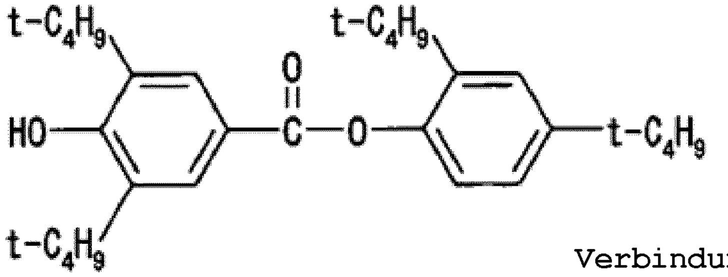

Verbindung B2

6. Verwendung der Landwirtschaftsfolie nach einem der Ansprüche 1 bis 5, wobei die Schicht ein thermoplastisches Harz enthält.

7. Verwendung der Landwirtschaftsfolie nach Anspruch 6, wobei das thermoplastische Harz lineares Polyethylen niedriger Dichte oder Polyethylen niedriger Dichte enthält.

8. Verwendung der Landwirtschaftsfolie nach Anspruch 6 oder 7, wobei ein Gesamtgehalt des gehinderten Aminlichtstabilisators und des Synergisten in der Schicht gleich oder mehr als 0,01 Masseteile und gleich oder weniger als 10 Masseteile, bezogen auf 100 Masseteile des thermoplastischen Harzes, beträgt.

**9.** Verwendung der Landwirtschaftsfolie nach einem der Ansprüche 1 bis 8 zur Bildung eines Gewächshauses.

**10.** Verfahren zum Anbau einer Pflanze, umfassend:

einen Schritt des Anordnens der Landwirtschaftsfolie nach einem der Ansprüche 1 bis 9 in einem Gewächshaus;
einen Schritt des Anordnens einer Pflanze in dem Gewächshaus; und
einen Schritt des Durchführens von Schwefelbegasung oder Schwefelbesprühung in dem Gewächshaus.

**11.** Verwendung einer Harzzusammensetzung, umfassend ein thermoplastisches Harz, eine oder zwei oder mehrere gehinderte Aminlichtstabilisatoren und einen Synergisten, zur Bildung einer Schicht einer Landwirtschaftsfolie, verwendet in einem Anbauverfahren von Schwefelbegasung oder Schwefelbesprühung,

wobei die eine oder zwei oder mehreren gehinderten Aminlichtstabilisatoren aus der Gruppe, bestehend aus einer Verbindung, dargestellt durch die Allgemeine Formel (A1), und einer Verbindung, dargestellt durch die Allgemeine Formel (A2), ausgewählt werden, und
wobei der Synergist eine oder zwei oder mehrere, ausgewählt aus Benzoatverbindungen, dargestellt durch die Allgemeine Formel (B), enthält,

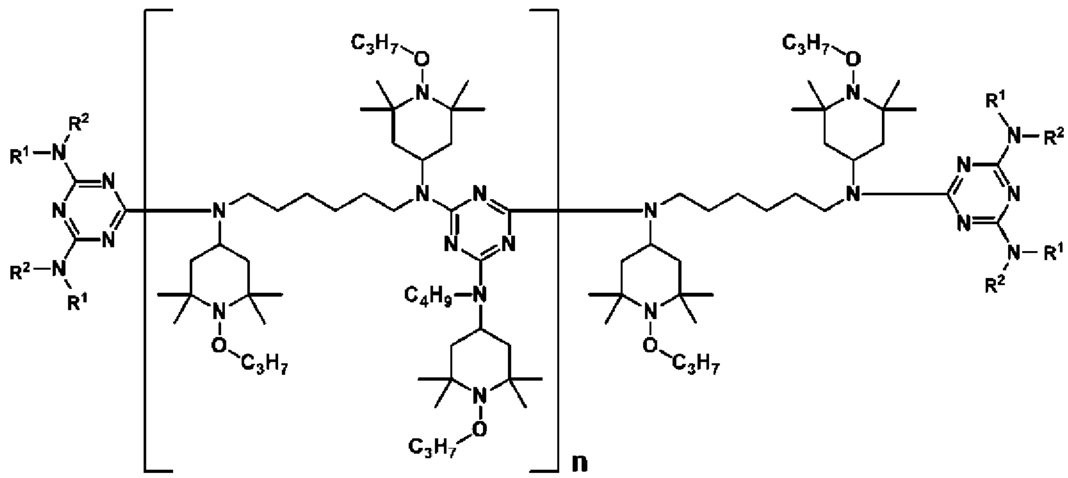

(A1)

(in der Allgemeinen Formel (A1) können $R^1$ und $R^2$ gleich oder verschieden voneinander sein und stellen jeweils unabhängig eine Alkylgruppe mit 1 bis 8 Kohlenstoffatomen dar, und in der Allgemeinen Formel (A1) ist n eine ganze Zahl von 0 oder mehr.),

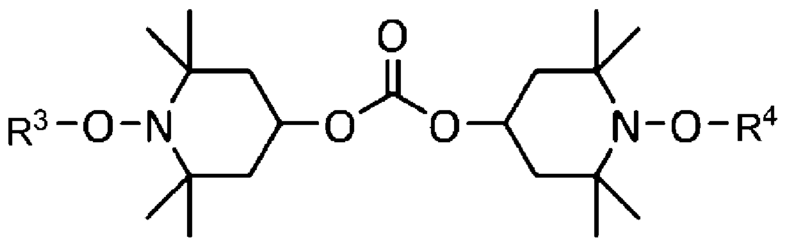

(A2)

(in der Allgemeinen Formel (A2) können $R^3$ und $R^4$ gleich oder verschieden voneinander sein und stellen jeweils unabhängig eine Alkylgruppe mit 1 bis 20 Kohlenstoffatomen dar.),

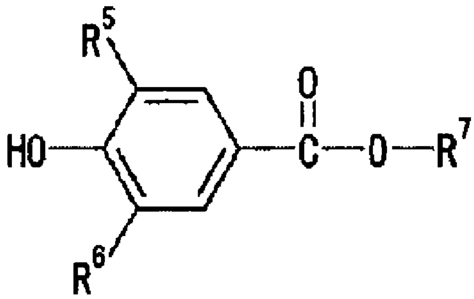

(B)

(in der Allgemeinen Formel (B) können $R^5$ und $R^6$ gleich oder verschieden voneinander sein und stellen jeweils unabhängig eine Alkylgruppe mit 1 bis 8 Kohlenstoffatomen dar, und stellt $R^7$ eine Alkylgruppe mit 1 bis 30 Kohlenstoffatomen, eine Arylgruppe mit 6 bis 30 Kohlenstoffatomen oder eine Alkylarylgruppe mit 7 bis 30 Kohlenstoffatomen dar.),
wobei X und Y in einem Fall, wo der massebezogene Gehalt des gehinderten Aminlichtstabilisators in der Schicht als X definiert wird und der massebezogene Gehalt des Synergisten in der Schicht als Y definiert wird, $0{,}2/0{,}8 \leq X/Y \leq 0{,}6/0{,}4$ genügen.

**12.** Verwendung eines oder zweier oder mehrerer gehinderter Aminlichtstabilisatoren und eines Synergisten zur Bildung einer Schicht einer Landwirtschaftsfolie, verwendet in einem Anbauverfahren von Schwefelbegasung oder Schwefelbesprühung,

wobei die eine oder zwei oder mehreren gehinderten Aminlichtstabilisatoren aus der Gruppe, bestehend aus einer Verbindung, dargestellt durch die Allgemeine Formel (A1), und einer Verbindung, dargestellt durch die Allgemeine Formel (A2), ausgewählt werden, und
wobei der Synergist eine oder zwei oder mehrere, ausgewählt aus Benzoatverbindungen, dargestellt durch die Allgemeine Formel (B), enthält,

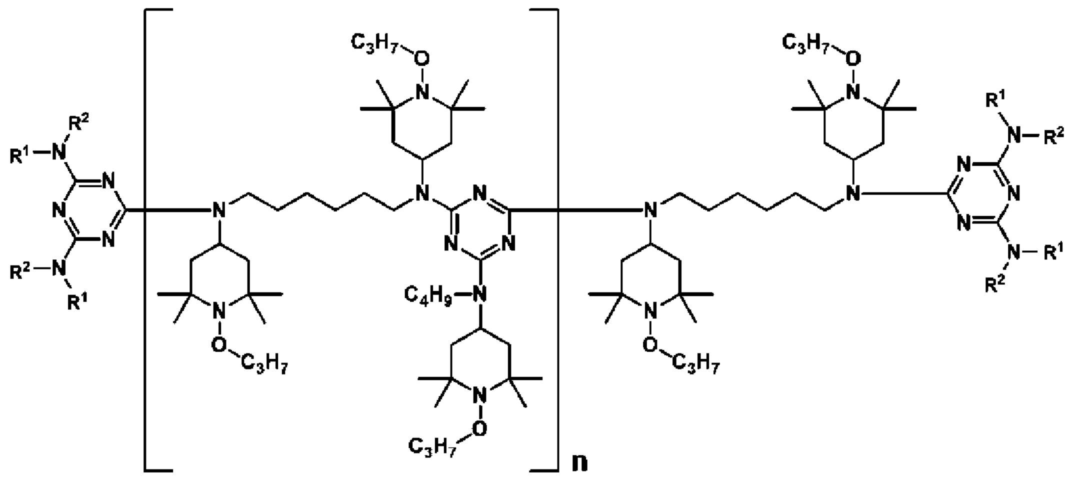

(A1)

(in der Allgemeinen Formel (A1) können $R^1$ und $R^2$ gleich oder verschieden voneinander sein und stellen jeweils unabhängig eine Alkylgruppe mit 1 bis 8 Kohlenstoffatomen dar, und in der Allgemeinen Formel (A1) ist n eine ganze Zahl von 0 oder mehr.),

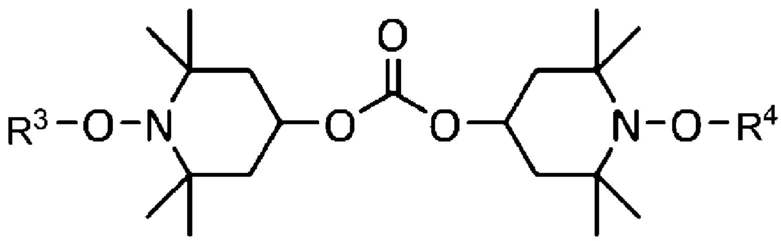

(A2)

(in der Allgemeinen Formel (A2) können $R^3$ und $R^4$ gleich oder verschieden voneinander sein und stellen jeweils unabhängig eine Alkylgruppe mit 1 bis 20 Kohlenstoffatomen dar.),

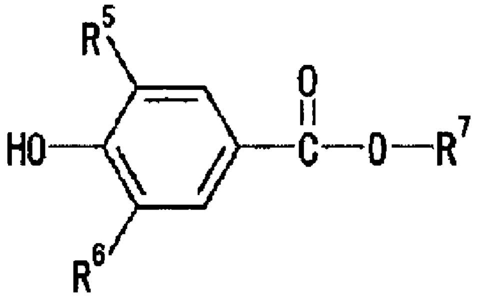

(B)

(in der Allgemeinen Formel (B) können $R^5$ und $R^6$ gleich oder verschieden voneinander sein und stellen jeweils unabhängig eine Alkylgruppe mit 1 bis 8 Kohlenstoffatomen dar, und stellt $R^7$ eine Alkylgruppe mit 1 bis 30 Kohlenstoffatomen, eine Arylgruppe mit 6 bis 30 Kohlenstoffatomen oder eine Alkylarylgruppe mit 7 bis 30 Kohlenstoffatomen dar.),
wobei X und Y in einem Fall, wo der massebezogene Gehalt des gehinderten Aminlichtstabilisators in der Schicht als X definiert wird und der massebezogene Gehalt des Synergisten in der Schicht als Y definiert wird, $0{,}2/0{,}8 \leq X/Y \leq 0{,}6/0{,}4$ genügen.

**13.** Verfahren zur Verbesserung einer Fähigkeit einer Landwirtschaftsfolie, Schwefelabsorption zu unterdrücken, umfassend:

Mischen eines oder zweier oder mehrerer gehinderter Aminlichtstabilisatoren und eines Synergisten zur Bildung einer Schicht der Landwirtschaftsfolie,
wobei die eine oder zwei oder mehreren gehinderten Aminlichtstabilisatoren aus der Gruppe, bestehend aus einer Verbindung, dargestellt durch die Allgemeine Formel (A1), und einer Verbindung, dargestellt durch die Allgemeine Formel (A2), ausgewählt werden, und
wobei der Synergist eine oder zwei oder mehrere, ausgewählt aus Benzoatverbindungen, dargestellt durch die Allgemeine Formel (B), enthält,

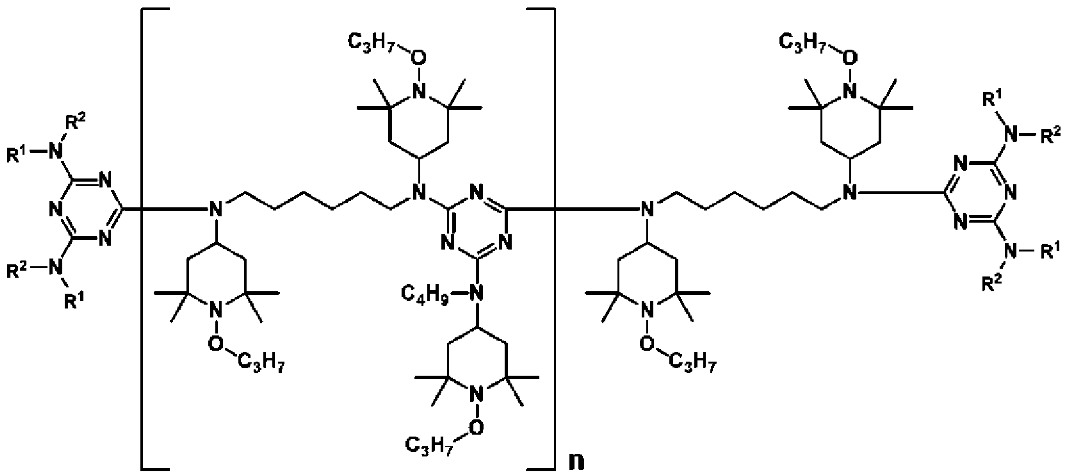

(A1)

(in der Allgemeinen Formel (A1) können $R^1$ und $R^2$ gleich oder verschieden voneinander sein und stellen jeweils unabhängig eine Alkylgruppe mit 1 bis 8 Kohlenstoffatomen dar, und in der Allgemeinen Formel (A1) ist n eine ganze Zahl von 0 oder mehr.),

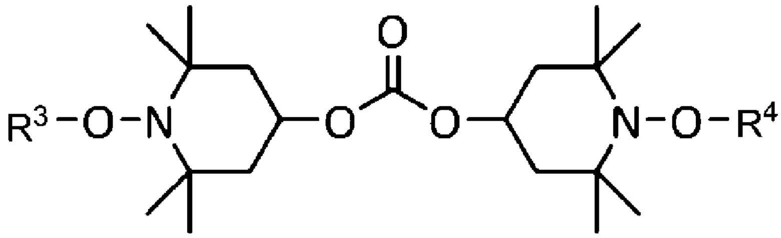 (A2)

(in der Allgemeinen Formel (A2) können $R^3$ und $R^4$ gleich oder verschieden voneinander sein und stellen jeweils unabhängig eine Alkylgruppe mit 1 bis 20 Kohlenstoffatomen dar.),

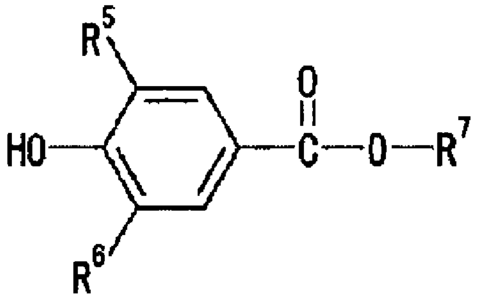 (B)

(in der Allgemeinen Formel (B) können $R^5$ und $R^6$ gleich oder verschieden voneinander sein und stellen jeweils unabhängig eine Alkylgruppe mit 1 bis 8 Kohlenstoffatomen dar, und stellt $R^7$ eine Alkylgruppe mit 1 bis 30 Kohlenstoffatomen, eine Arylgruppe mit 6 bis 30 Kohlenstoffatomen oder eine Alkylarylgruppe mit 7 bis 30 Kohlenstoffatomen dar.),

wobei X und Y in einem Fall, wo der massebezogene Gehalt des gehinderten Aminlichtstabilisators in der Schicht als X definiert wird und der massebezogene Gehalt des Synergisten in der Schicht als Y definiert wird, $0{,}2/0{,}8 \leq X/Y \leq 0{,}6/0{,}4$ genügen.

**Revendications**

1. Utilisation d'un film agricole dans un procédé de croissance de fumigation au soufre ou pulvérisation de soufre, comprenant :

une couche contenant un ou deux stabilisants lumineux à amine gênée ou plus sélectionnés parmi le groupe constitué d'un composé représenté par la Formule générale (A1) et d'un composé représenté par la Formule générale (A2), et

un synergiste contenant un ou deux éléments ou plus sélectionnés parmi des composés de benzoate représentés par la Formule générale (B),

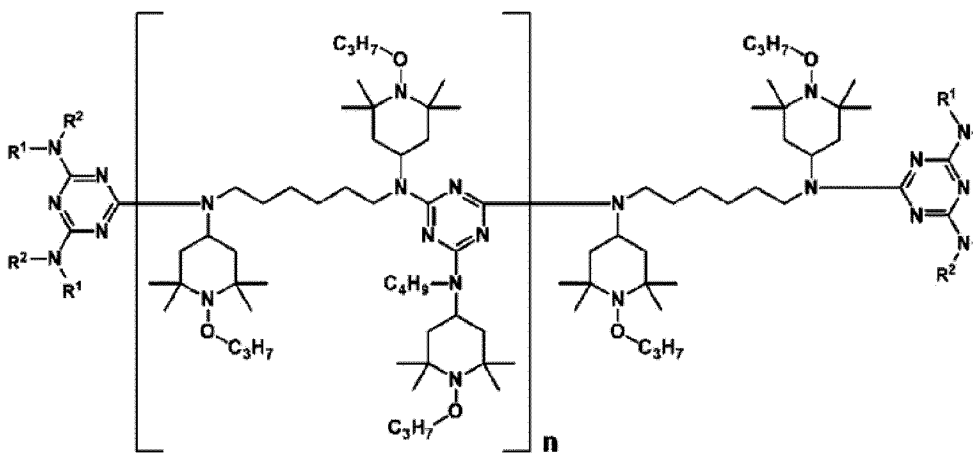 (A1)

(dans la Formule générale (A1), $R^1$ et $R^2$ peuvent être identiques ou différents l'un de l'autre et représentent chacun indépendamment un groupe alkyle ayant 1 à 8 atomes de carbone, et dans la Formule générale (A1), n est un entier de 0 ou plus.),

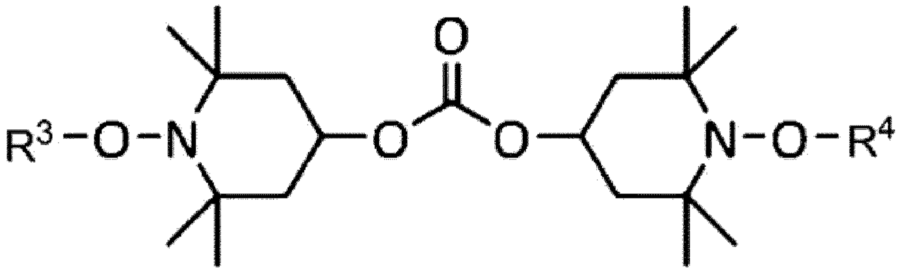

(A2)

(dans la Formule générale (A2), $R^3$ et $R^4$ peuvent être identiques ou différents l'un de l'autre et représentent chacun indépendamment un groupe alkyle ayant 1 à 20 atomes de carbone.),

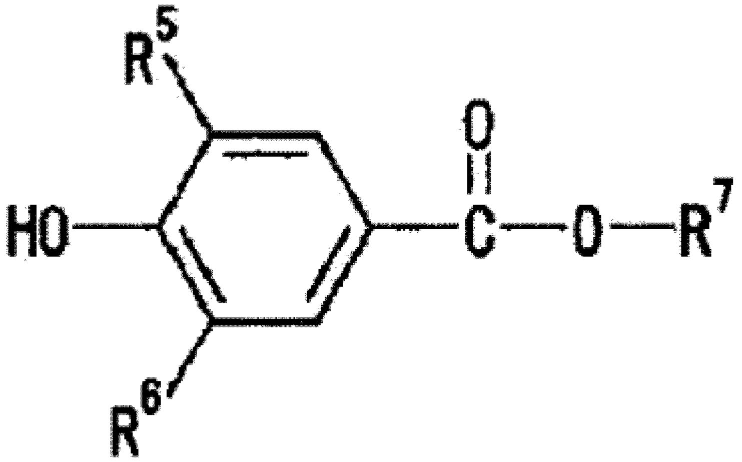

(B)

(dans la Formule générale (B), $R^5$ et $R^6$ peuvent être identiques ou différents l'un de l'autre et représentent chacun indépendamment un groupe alkyle ayant 1 à 8 atomes de carbone, et $R^7$ représente un groupe alkyle ayant 1 à 30 atomes de carbone, un groupe aryle ayant 6 à 30 atomes de carbone, ou un groupe alkylaryle ayant 7 à 30 atomes de carbone.),
dans laquelle X et Y satisfont $0{,}2/0{,}8 \leq X/Y \leq 0{,}6/0{,}4$, dans un cas où la teneur en le stabilisant lumineux à amine gênée en termes de masse dans la couche est définie comme X et la teneur en le synergiste en termes de masse dans la couche est définie comme Y, et
dans laquelle $\Delta W/H1$ est supérieur ou égal à 2,80 ppm/$\mu$m et inférieur ou égal à 4,70 ppm/$\mu$m, dans un cas où une quantité d'absorption de soufre mesurée conformément à la Procédure A est définie comme $\Delta W$ et une épaisseur du film agricole est définie comme H1,
<Procédure A>

Procédure A1 : en utilisant le film agricole, la teneur (ppm) en un soufre élémentaire dans le film agricole avant un traitement de fumigation au soufre est mesurée conformément à un ordre de (1), (2), (4) et (5), et la valeur mesurée est définie comme $S_0$ ;
Procédure A2 : en utilisant le film agricole devant être mesuré dans la Procédure A1, une teneur (ppm) en le soufre élémentaire dans le film agricole après le traitement de fumigation au soufre est mesurée conformément à un ordre de (1), (2), (3), (4) et (5), et la valeur mesurée est définie comme $S_1$, à condition que $S_1$ soit une valeur moyenne de quatre valeurs mesurées ; et
Procédure A3 : en utilisant $S_0$ obtenue dans la Procédure A1 et $S_1$ obtenue dans la Procédure A2, une quantité d'absorption de soufre (ppm) du film agricole est calculée en fonction de l'Expression (I),

$$|S_1-S_0| \qquad \text{Expression (I)}$$

(1) : préparation d'un échantillon d'essai
le film agricole est découpé pour produire un échantillon d'essai de film en forme de bande A ayant une longueur de 13 cm et une largeur de 2,5 cm ;
(2) : traitement de lavage
l'échantillon d'essai A est immergé dans de l'eau distillée ayant une température liquide de 25 °C, retiré de l'eau distillée, puis séché ;
(3) : traitement de fumigation au soufre

une serre en vinyle ayant un espace fermé ayant une forme essentiellement de parallélépipède rectangle avec une longueur de 50 cm, une largeur de 56 cm et
une hauteur de 60 cm est préparée, puis un agitateur est installé sur une surface supérieure à l'intérieur de la serre en vinyle, un dispositif de chauffage est installé sur une surface inférieure à l'intérieur de la serre en vinyle, un plateau en feuille d'aluminium est disposé sur la dispositif de chauffage, quatre des échantillons d'essai A sont installés dans un état suspendu à l'intérieur de la serre en vinyle, et
puis l'opération de fumigation au soufre suivante est répétée quatre fois ;
(opération de fumigation au soufre)
120 mg de soufre en poudre sont placés dans le plateau, et ensuite une vitesse de rotation de l'agitateur est réglée sur 180 tours/min, et le plateau est chauffé à 190 °C pendant 4 heures ;

(4) : traitement de surface

une irradiation lumineuse est réalisée sur l'échantillon d'essai A pendant 102 minutes dans les conditions suivantes, et ensuite de l'eau est pulvérisée sur l'échantillon d'essai A pendant 18 minutes conjointement à l'irradiation lumineuse dans les conditions suivantes, et cette opération pendant un total de 120 minutes est réalisée comme un cycle pour un total de 60 cycles, moyennant quoi un traitement de surface pendant un total de 120 heures est réalisé sur l'échantillon d'essai A ;
(conditions d'irradiation lumineuse)
l'échantillon d'essai A est irradié par une lampe au xénon ayant une intensité d'irradiation de 60 $W/m^2$ dans des conditions d'une température de 65 °C et
d'une humidité relative de 50 % ; et

(5) : mesure de teneur en soufre élémentaire
200 mg d'un échantillon obtenu en découpant l'échantillon d'essai A dans une direction d'épaisseur de plaque sont ajoutés à 5 g d'un acide nitrique à 70 % pour obtenir une solution d'acide nitrique, la solution d'acide nitrique est soumise à un prétraitement pour liquéfier l'échantillon en utilisant un procédé de décomposition mouillée aux micro-ondes pour obtenir une solution de mesure, et la teneur en soufre élémentaire dans la solution de mesure obtenue est mesurée en utilisant un spectromètre d'émission à plasma à couplage inductif.

**2.** Utilisation du film agricole selon la revendication 1,

dans laquelle $T_{290}/T_{340}$ est supérieur ou égal à 0,76 et inférieur ou égal à 1,00, dans un cas où une transmittance lumineuse de 290 nm est définie comme $T_{290}$ et une transmittance lumineuse de 340 nm est définie comme $T_{340}$, la transmittance lumineuse étant mesurée conformément à la Procédure B,
<Procédure B>

Procédure B1 : en utilisant le film agricole devant être mesuré dans la Procédure A, le film est découpé pour produire un échantillon d'essai de film en forme de bande B ayant une longueur de 10 cm et une largeur de 5 cm, et ensuite l'échantillon d'essai B est immergé dans de la paraffine liquide, et l'échantillon d'essai retiré B est maintenu dans un état suspendu pendant 30 minutes pour réaliser un prétraitement sur l'échantillon d'essai B ; et
Procédure B2 : l'échantillon d'essai B prétraité dans la Procédure B1 est placé dans un spectrophotomètre, une transmittance lumineuse (%) est mesurée à une longueur d'onde de 200 nm à 700 nm, la valeur mesurée obtenue est normalisée de sorte qu'une transmittance lumineuse à 400 nm est de 85 %, et une transmittance lumineuse à une longueur d'onde de Xnm après normalisation est exprimée comme Tx (%).

**3.** Utilisation du film agricole selon la revendication 1 ou 2,

dans laquelle une transmittance lumineuse $T_{660}$ à 660 nm dans le film agricole, telle que mesurée conformément à la Procédure B, est supérieure ou égale à 80 %.

**4.** Utilisation du film agricole selon l'une quelconque des revendications 1 à 3,

dans laquelle le composé représenté par la Formule générale (A1) inclut le composé A1 suivant, et le composé représenté par la Formule générale (A2) inclut le composé A2 suivant.

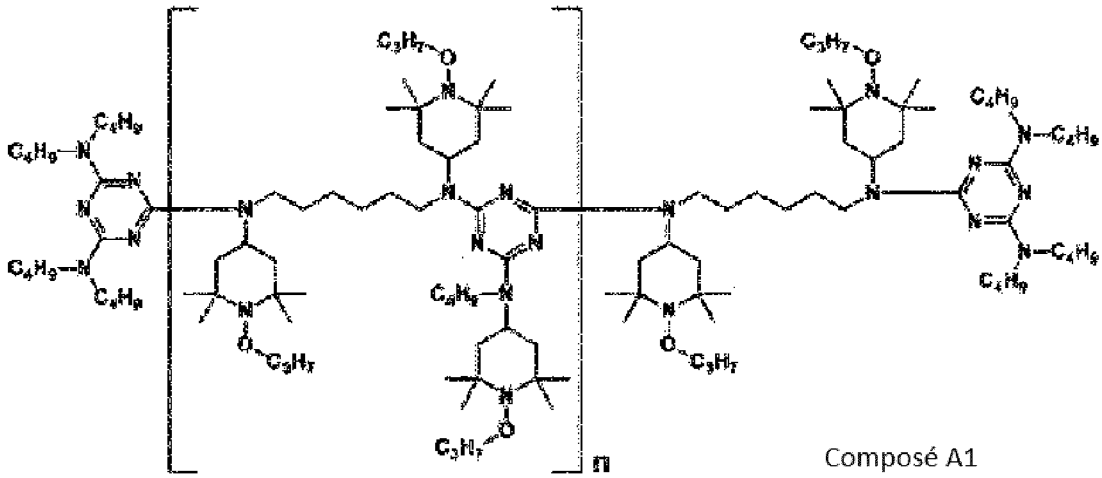

Composé A1

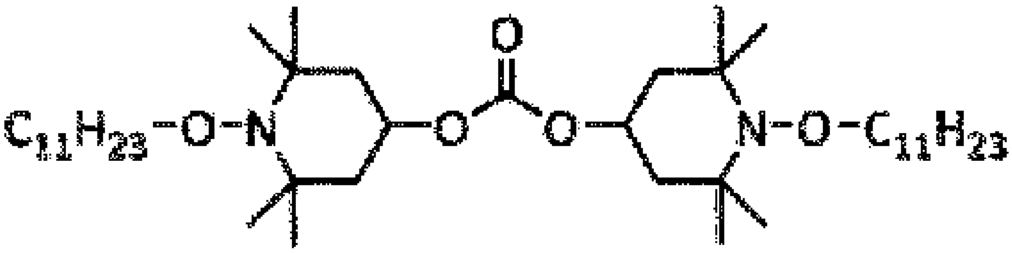

Composé A2

**5.** Utilisation du film agricole selon l'une quelconque des revendications 1 à 4, dans laquelle le composé de benzoate représenté par la Formule générale (B) inclut au moins un du composé B1 ou composé B2 suivant.

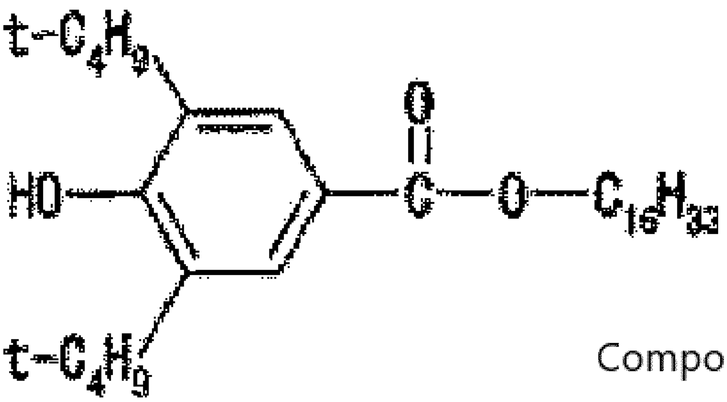

Composé B1

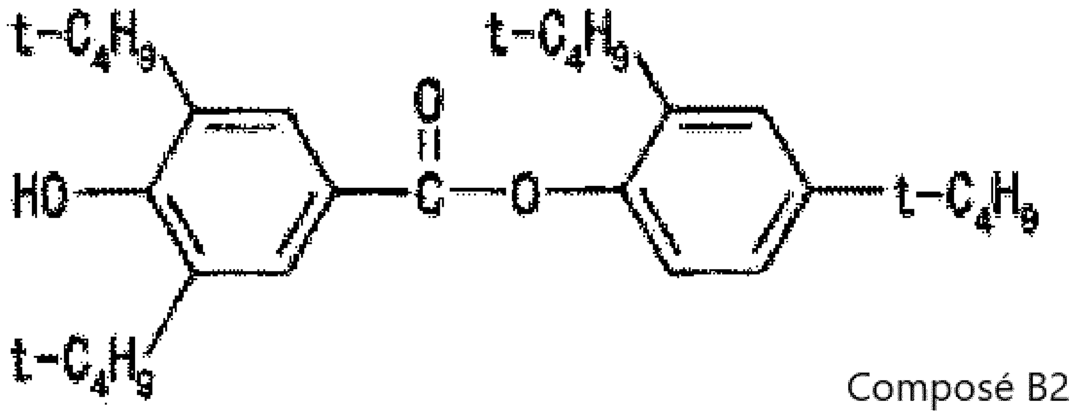

Composé B2

6. Utilisation du film agricole selon l'une quelconque des revendications 1 à 5, dans laquelle la couche contient une résine thermoplastique.

7. Utilisation du film agricole selon la revendication 6,
dans laquelle la résine thermoplastique contient du polyéthylène linéaire basse densité ou polyéthylène basse densité.

8. Utilisation du film agricole selon la revendication 6 ou 7,
dans laquelle une teneur totale en le stabilisant lumineux à amine gênée et le synergiste dans la couche est supérieure ou égale à 0,01 partie en masse et inférieure ou égale à 10 parties en masse par rapport à 100 parties en masse de la résine thermoplastique.

9. Utilisation du film agricole selon l'une quelconque des revendications 1 à 8 pour former une serre.

10. Procédé de croissance d'une plante, comprenant :

une étape consistant à disposer le film agricole selon l'une quelconque des revendications 1 à 9 dans une serre ;
une étape consistant à disposer une plante dans la serre ; et
une étape consistant à réaliser une fumigation au soufre ou pulvérisation de soufre dans la serre.

11. Utilisation d'une composition de résine comprenant une résine thermoplastique, un ou deux stabilisants lumineux à amine gênée ou plus et un synergiste pour former une couche d'un film agricole utilisé dans un procédé de croissance de fumigation au soufre ou pulvérisation de soufre,

dans laquelle les un ou deux stabilisants lumineux à amine gênée ou plus sont sélectionnés parmi le groupe constitué d'un composé représenté par la Formule générale (A1) et d'un composé représenté par la Formule générale (A2), et
dans laquelle le synergiste contient un ou deux éléments ou plus sélectionnés parmi des composés de benzoate représentés par la Formule générale (B),

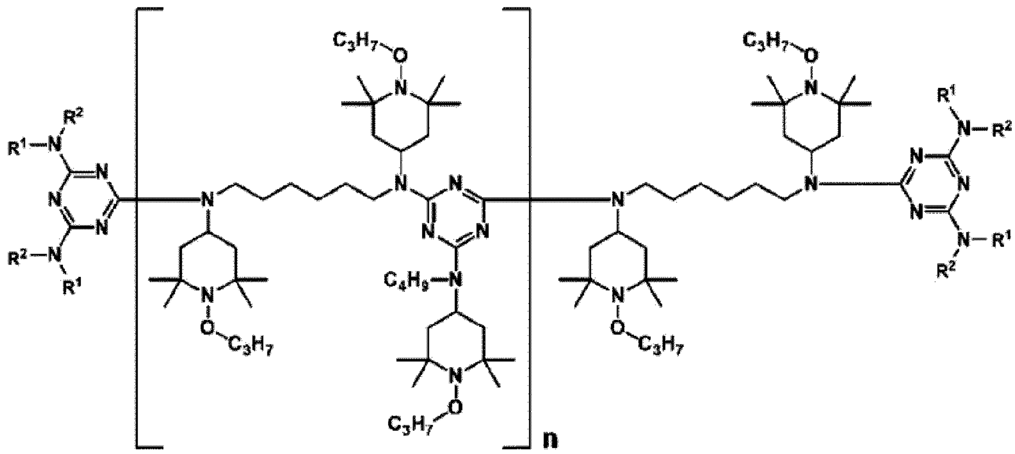

(A1)

(dans la Formule générale (A1), $R^1$ et $R^2$ peuvent être identiques ou différents l'un de l'autre et représentent chacun indépendamment un groupe alkyle ayant 1 à 8 atomes de carbone, et dans la Formule générale (A1), n est un entier de 0 ou plus.),

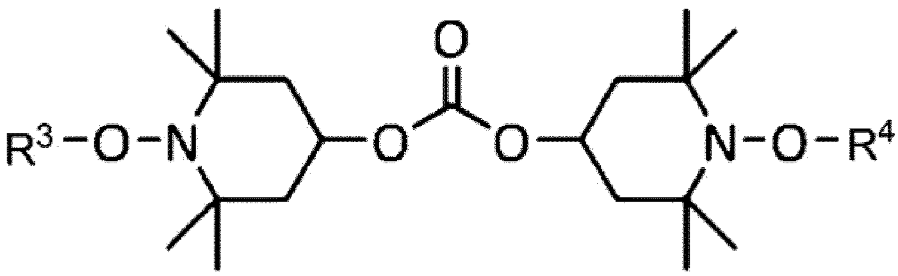

(A2)

(dans la Formule générale (A2), $R^3$ et $R^4$ peuvent être identiques ou différents l'un de l'autre et représentent chacun indépendamment un groupe alkyle ayant 1 à 20 atomes de carbone.),

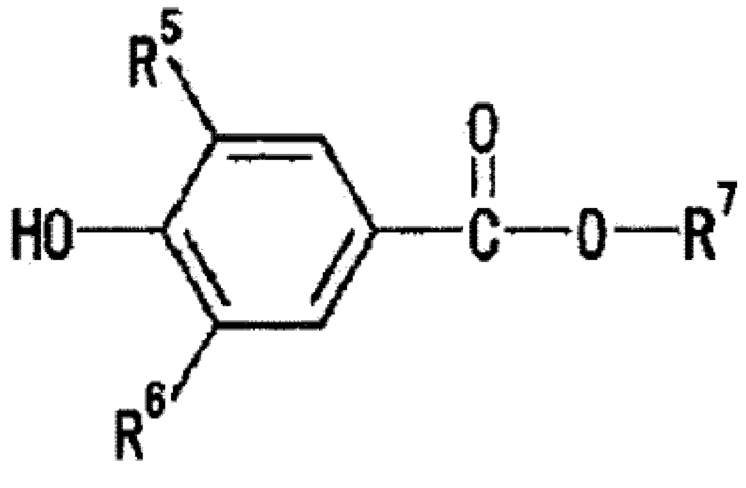

(B)

(dans la Formule générale (B), $R^5$ et $R^6$ peuvent être identiques ou différents l'un de l'autre et représentent chacun indépendamment un groupe alkyle ayant 1 à 8 atomes de carbone, et $R^7$ représente un groupe alkyle ayant 1 à 30 atomes de carbone, un groupe aryle ayant 6 à 30 atomes de carbone, ou un groupe alkylaryle ayant 7 à 30 atomes de carbone.),

dans laquelle X et Y satisfont $0{,}2/0{,}8 \leq X/Y \leq 0{,}6/0{,}4$, dans un cas où la teneur en le stabilisant lumineux à amine gênée en termes de masse dans la couche est définie comme X et la teneur en le synergiste en termes de masse dans la couche est définie comme Y.

**12.** Utilisation d'un ou deux stabilisants lumineux à amine gênée ou plus et d'un synergiste pour former une couche

d'un film agricole utilisé dans un procédé de croissance de fumigation au soufre ou pulvérisation de soufre,

dans laquelle les un ou deux stabilisants lumineux à amine gênée ou plus sont sélectionnés parmi le groupe constitué d'un composé représenté par la Formule générale (A1) et d'un composé représenté par la Formule générale (A2), et

dans laquelle le synergiste contient un ou deux éléments ou plus sélectionnés parmi des composés de benzoate représentés par la Formule générale (B),

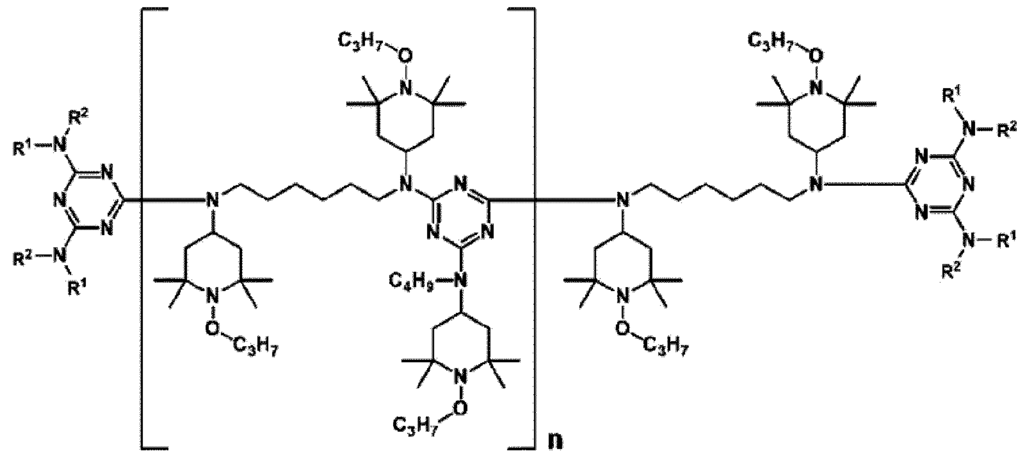

(A1)

(dans la Formule générale (A1), $R^1$ et $R^2$ peuvent être identiques ou différents l'un de l'autre et représentent chacun indépendamment un groupe alkyle ayant 1 à 8 atomes de carbone, et dans la Formule générale (A1), n est un entier de 0 ou plus.),

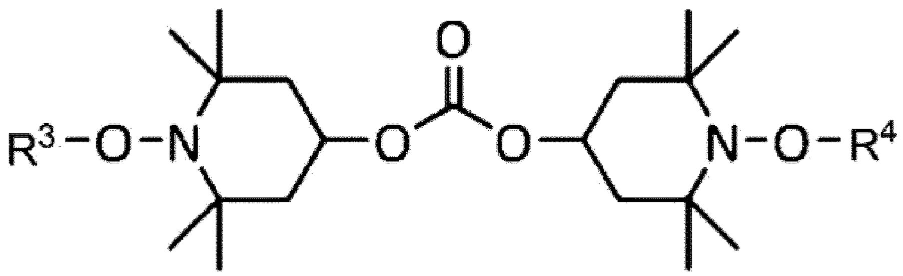

(A2)

(dans la Formule générale (A2), $R^3$ et $R^4$ peuvent être identiques ou différents l'un de l'autre et représentent chacun indépendamment un groupe alkyle ayant 1 à 20 atomes de carbone.),

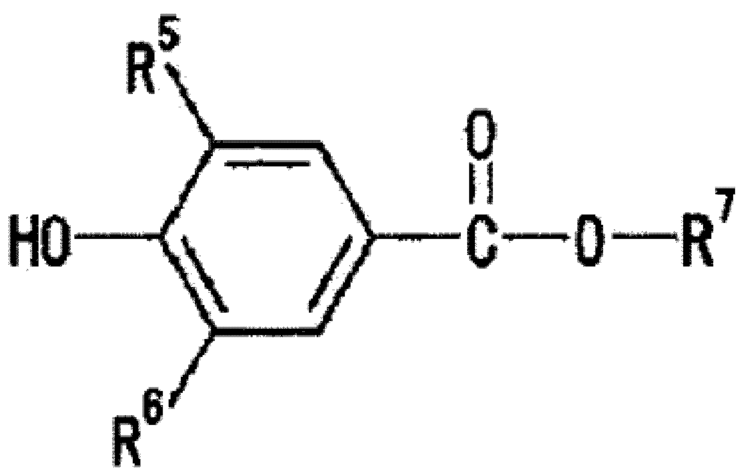

(B)

(dans la Formule générale (B), $R^5$ et $R^6$ peuvent être identiques ou différents l'un de l'autre et représentent

chacun indépendamment un groupe alkyle ayant 1 à 8 atomes de carbone, et $R^7$ représente un groupe alkyle ayant 1 à 30 atomes de carbone, un groupe aryle ayant 6 à 30 atomes de carbone, ou un groupe alkylaryle ayant 7 à 30 atomes de carbone.),

dans laquelle X et Y satisfont 0,2/0,8 ≤ X/Y ≤ 0,6/0,4, dans un cas où la teneur en le stabilisant lumineux à amine gênée en termes de masse dans la couche est définie comme X et la teneur en le synergiste en termes de masse dans la couche est définie comme Y.

**13.** Procédé d'amélioration d'une capacité d'un film agricole à supprimer l'absorption de soufre, comprenant :

mélanger un ou deux stabilisants lumineux à amine gênée ou plus et un synergiste pour former une couche du film agricole,

dans lequel les un ou deux stabilisants lumineux à amine gênée ou plus sont sélectionnés parmi le groupe constitué d'un composé représenté par la Formule générale (A1) et d'un composé représenté par la Formule générale (A2), et

dans lequel le synergiste contient un ou deux éléments ou plus sélectionnés parmi des composés de benzoate représentés par la Formule générale (B),

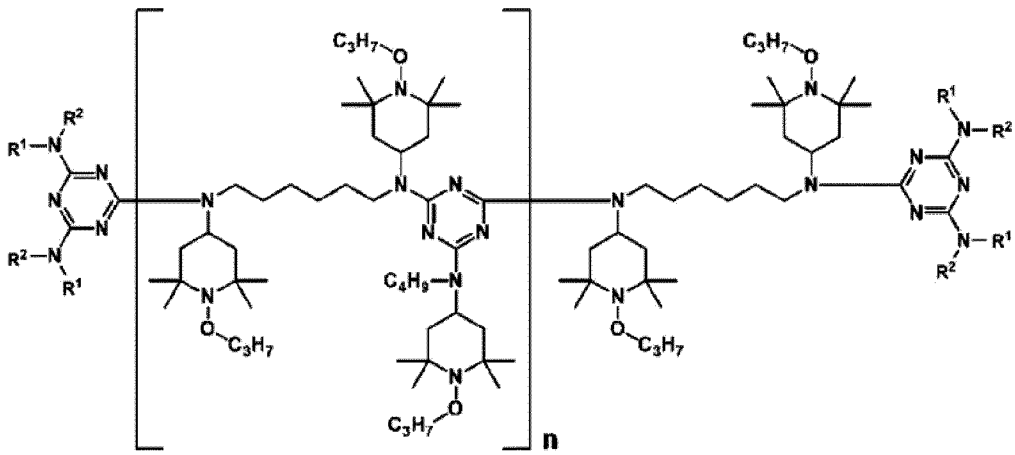

(A1)

(dans la Formule générale (A1), $R^1$ et $R^2$ peuvent être identiques ou différents l'un de l'autre et représentent chacun indépendamment un groupe alkyle ayant 1 à 8 atomes de carbone, et dans la Formule générale (A1), n est un entier de 0 ou plus.),

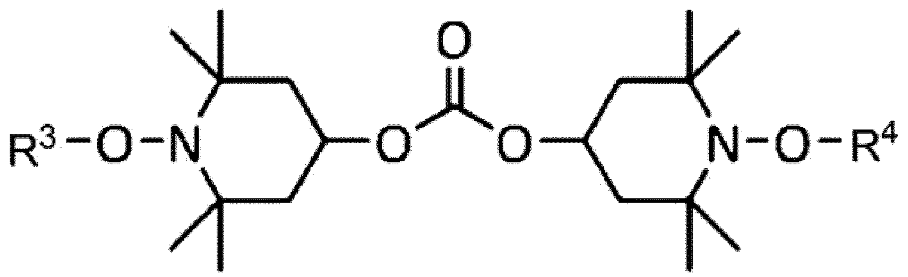

(A2)

(dans la Formule générale (A2), $R^3$ et $R^4$ peuvent être identiques ou différents l'un de l'autre et représentent chacun indépendamment un groupe alkyle ayant 1 à 20 atomes de carbone.),

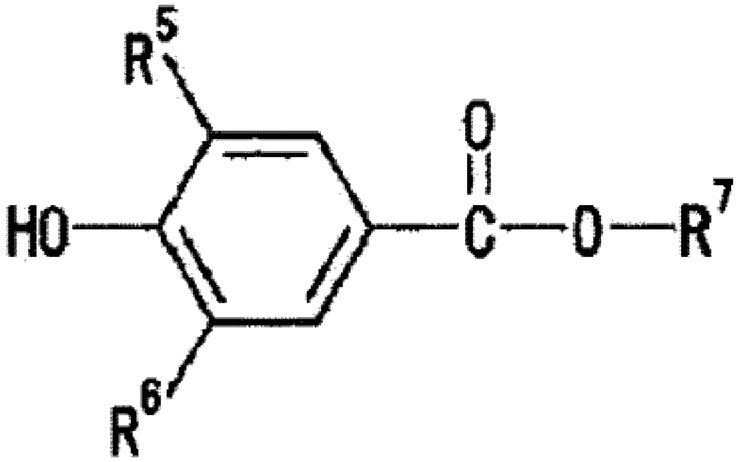

(B)

(dans la Formule générale (B), $R^5$ et $R^6$ peuvent être identiques ou différents l'un de l'autre et représentent chacun indépendamment un groupe alkyle ayant 1 à 8 atomes de carbone, et $R^7$ représente un groupe alkyle ayant 1 à 30 atomes de carbone, un groupe aryle ayant 6 à 30 atomes de carbone, ou un groupe alkylaryle ayant 7 à 30 atomes de carbone.),
dans laquelle X et Y satisfont $0,2/0,8 \leq X/Y \leq 0,6/0,4$, dans un cas où la teneur en le stabilisant lumineux à amine gênée en termes de masse dans la couche est définie comme X et la teneur en le synergiste en termes de masse dans la couche est définie comme Y.

Fig.1(A)

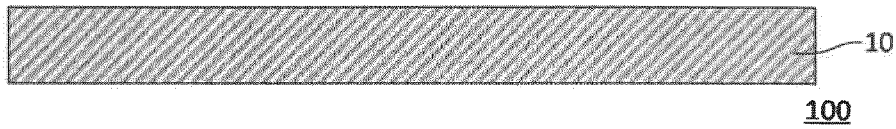


Fig.1(B)

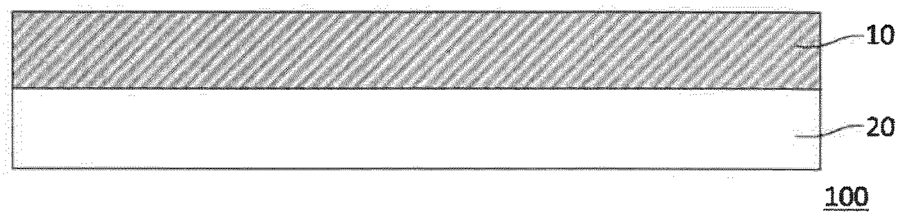


Fig.2

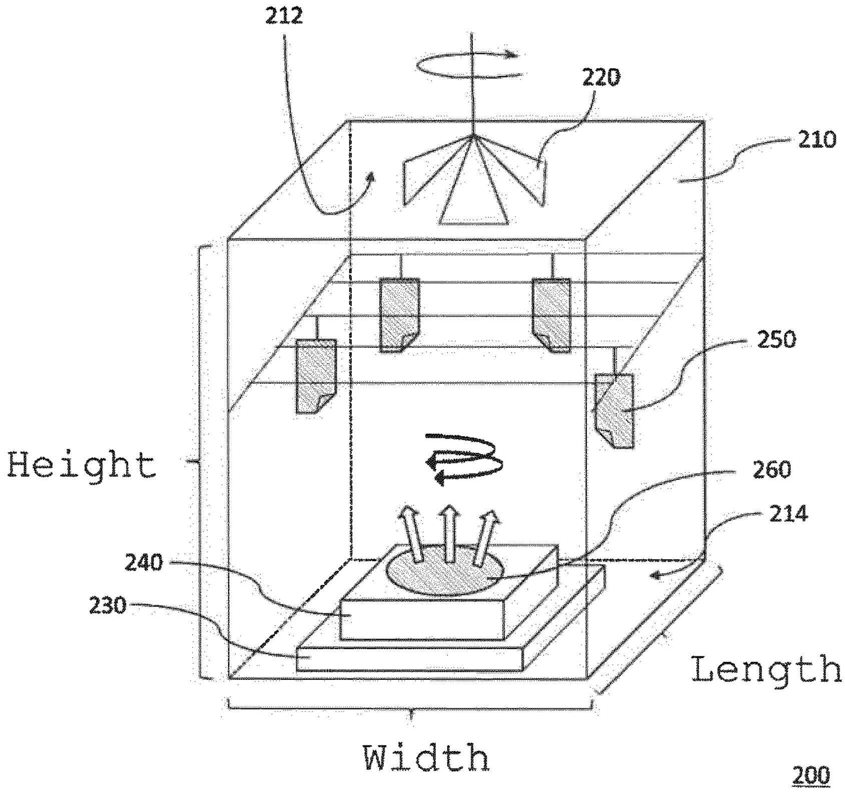

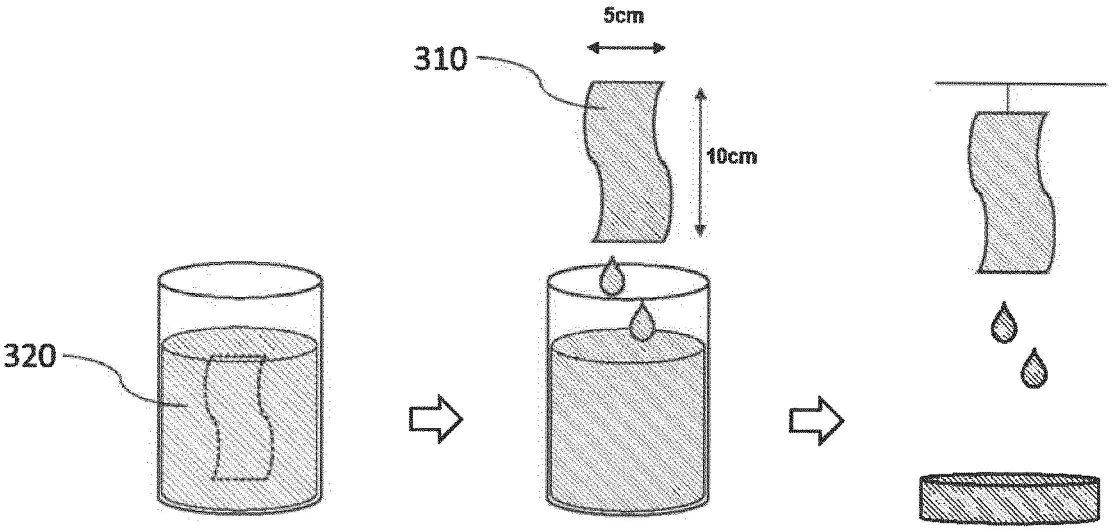


Fig.3(A) Fig.3(B) Fig.3(C)

Fig.4

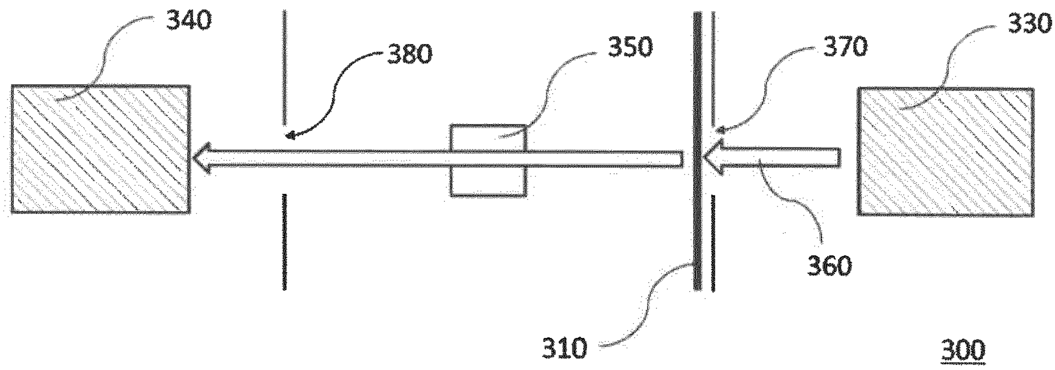

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015198579 A
- JP 2003231777 A
- US 2015353710 A1